# EUROPÄISCHE PATENTANMELDUNG

(11) **EP 4 778 614 A1**
(43) Veröffentlichungstag der Anmeldung: **22.07.2026**
(21) Anmeldenummer: 25152755.2
(22) Anmeldetag: 20.01.2025
(51) Int. Cl.: B01D 53/22, B01D 71/02

(54) **KOHLENSTOFFHALTIGE MEMBRAN FÜR DIE WASSER- UND GASTRENNUNG**

(71) Anmelder: Forschungszentrum Jülich GmbH, 52425 Jülich (DE)
(72) Erfinder: Van Gestel, Tim, 52428 Jülich (DE); Meulenberg, Wilhelm Albert, 6294 AA Vijlen (DE)
(74) Vertreter: Gille Hrabal Partnerschaftsgesellschaft mbB Patentanwälte

(57) **Zusammenfassung**

Die Erfindung betrifft eine neue Membran für die Trennung von Gas-, Dampf- und Flüssigkeitsgemischen mit einer Schicht thermisch stabilisierter (bevorzugt karbonisierter) Polymere und/oder Copolymere von Verbindungen mit mindestens einer Polyhydroxyphenol-Gruppe, sowie Verfahren zur Herstellung solcher Membranen, sowie ihre Verwendung als Molekularsiebmembran.

## Beschreibung

### EINLEITUNG

Die Erfindung betrifft eine neue Membran für die Trennung von Gas-, Dampf- und Flüssigkeitsgemischen mit einer oder mehreren Schichten, umfassend karbonisierte Polymere und Copolymere von Verbindungen mit mindestens einer Polyhydroxyphenol-Gruppe, sowie Verfahren zur Herstellung solcher Membranen, sowie ihre Verwendung als Molekularsiebmembran.

### TECHNISCHER HINTERGRUND UND STAND DER TECHNIK

Trennmembranen können prinzipiell als poröse oder nicht poröse Schichten vorliegen. Bei den Trennmembranen unterscheidet man zwischen homogenen und asymmetrischen Membranen. Dabei sind homogene Membranen in der Regel sehr dünn ausgestaltet, um eine möglichst hohe Permeabilität pro Fläche aufzuweisen. Jedoch ist bei diesen dünnen Membranen die mechanische Stabilität häufig nicht ausreichend. Bei den asymmetrischen Membranen ist demgegenüber auf einer mechanisch stabilen porösen Unterstruktur mit hoher Permeabilität eine sehr dünne Trennschicht angeordnet.

Trennprozesse können nach den daran beteiligten Phasen (Fest, Flüssig, Gas) eingeteilt werden und finden in der industriellen Anwendung weite Verbreitung. Immer häufiger werden Membranprozesse auch als Alternative zu herkömmlichen Trennverfahren, wie beispielsweise die Destillation, die Kristallisation, die kryogene Trennung, die Adsorption oder auch die Extraktion, in Betracht gezogen.

Die Membrantechnologie wird als energieeffiziente Alternative zur Trennung zahlreicher Gase und Lösungsmittelmischungen angesehen, verglichen mit ausgereiften Technologien wie Druckwechsel-Adsorption und kryogene Destillation. Spezifische Beispiele beinhalten die Trennung von Wasserstoff aus der Vergasung, die Abgasbehandlung, und die Entwässerung von organischen Lösungsmitteln. In diesem Zusammenhang wurden anorganische mikroporöse Membranen aufgrund ihrer thermischen und chemischen Stabilität intensiv untersucht.

Bekannte Kandidaten für Membranwerkstoffe umfassen beispielsweise Silica, Zeolithe, Kohlenstoff und Graphen/Graphenoxid, Modifikationen des Kohlenstoffs mit 2D-Struktur.

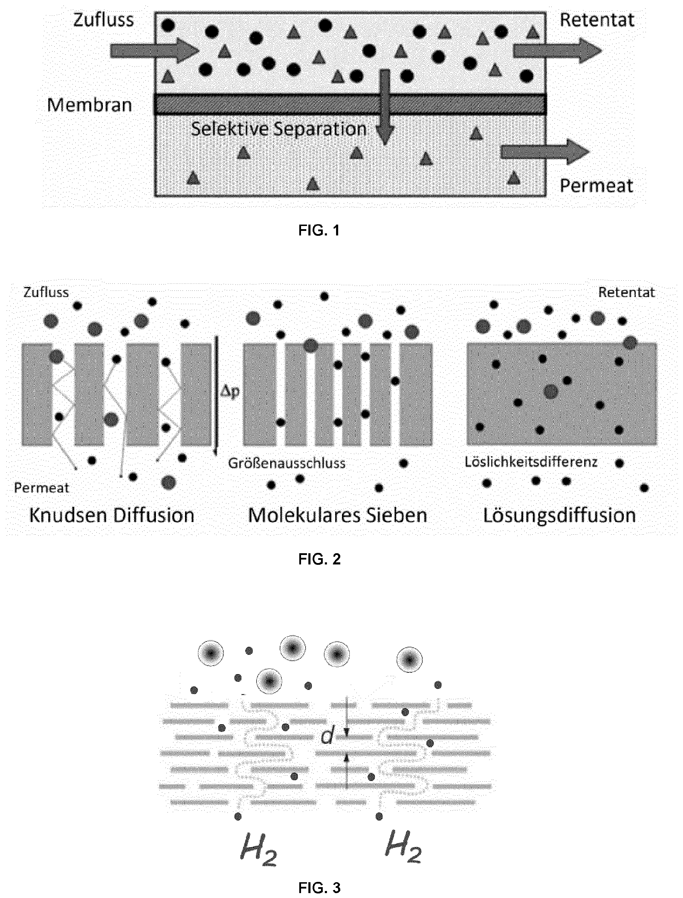

Die Membrantrennung ist schematisch in Fig. 1 dargestellt.

Prinzipiell gibt es drei Mechanismen, nach denen die Membrantrennung ablaufen kann, nämlich durch Knudsen-Diffusion, durch den Molekularsiebeffekt oder durch Adsorption kombiniert mit Oberflächendiffusion und Kapillarkondensation. Diese sind in Fig. 2 schematisch dargestellt.

Die Knudsen-Diffusion ist eine Art der Diffusion, die auftritt, wenn der Porendurchmesser kleiner ist als die mittlere freie Weglänge der diffundierenden Gasmoleküle. In diesem Fall stoßen die Gasmoleküle häufiger mit den Porenwänden zusammen als untereinander, was zur Knudsendiffusion und Trennung führt. Dieser Mechanismus führt jedoch zu einer begrenzten Trennleistung < 5 und ist in der Regel nicht für industrielle Anwendungen geeignet.

Molekularsiebung ist der Prozess, der die Knudsen-Diffusion ersetzt, wenn der Porendurchmesser dem der zu trennenden Gase ähnlich ist. Der Molekularsiebmechanismus beruht dabei auf einem Größenausschluss, wobei die kleineren Moleküle in sehr viel höherer Geschwindigkeit als die der größeren Moleküle durch die Membran permeieren. Im Falle eines idealen Molekularsiebverfahrens würde die Selektivität der Membran hier 100 % betragen.

Zur Herstellung von Membranen für die Trennung von Gas-, Dampf- und Flüssigkeitsgemischen werden gewöhnlich organische Polymere oder keramische Materialien verwendet, wobei Polymere, wegen ihrer einfacheren Herstellung, den Großteil der verwendeten Membranmaterialien ausmachen. Für viele aktuell sehr interessante, aber auch anspruchsvolle Aufgaben, z.B. beim Arbeiten unter hohen Temperaturen, hohen Drücken, mit aggressiven Chemikalien und in hydrothermalen Umgebungen, sind jedoch keramische Materialien erforderlich. Dabei werden zu der Kategorie der keramischen Materialien im Allgemeinen (und im Sinne der vorliegenden Erfindung) auch Kohlenstoff gezählt.

So sind auch bereits keramische mikroporöse Membranen bekannt, die eine Funktionsschicht aus Zeolith, Silica (SiO₂) oder Kohlenstoff aufweisen, sowie die so genannten hybriden SiOz Membranen, welche neben SiO₂ auch Kohlenstoffatome aufweisen. Diese Membrane werden als Alternative zu Polymermembranen vorgeschlagen. Sie sind in einem weiteren Anwendungsbereich einsetzbar und weisen zudem eine deutlich höhere Lebensdauer auf. Sie sind häufig beständig gegenüber den meisten organischen Lösungsmitteln und regelmäßig temperaturstabil bis zu ca. 300 °C bei hybriden Membranen und ggfs. auch bis zu noch höheren Temperaturen.

Insbesondere Zeolith-Membranen sind sowohl im Versuchsmaßstab als auch großtechnisch für den Einsatz bei Trennprozessen von Lösungsmittel, z.B. in der Flüssigphase (Pervaporation (PV)) oder in der Dampfphase (Dampfpermeation, engl. Vapour Permeation (VP)), geeignet. Einige dieser Membranen weisen eine extrem enge Porengrößenverteilung um ca. 0,5 nm auf, und sind insbesondere geeignet, um Wasser aus allen Arten von organischen Lösungsmitteln abzutrennen.

Mikroporöse amorphe SiO₂-Membranen sind bereits seit mehr als 25 Jahren bekannt. Diese Membranen weisen in der Regel eine mikroporöse SiOz-Membranschicht mit einer Porengröße < 0,5 nm auf, die über einen Sol-Gel-Prozess auf einen mesoporösen, γ-Al₂O₃ aufweisenden Träger aufgebracht wird. Seit ihrem Erscheinen haben diese Membranen steigendes Interesse hervorgerufen, da sie sowohl für die Wasser- als auch für die Gastrennung ausreichend gute Trenneigenschaften aufweisen.

Die derzeit verfügbaren keramischen Membranen bieten meist nur eine begrenzte Selektivität für die kleinsten Moleküle, was in der Regel darin begründet liegt, dass es schwierig ist, mikroporöse keramische Materialien zu defektfreien Dünnschichten zu verarbeiten und einheitliche Poren mit molekularen Abmessungen zu erzielen. Insbesondere für die Abtrennung der kleinsten Gase Helium (He) oder Wasserstoff (H₂) müssen die Membranen molekularsiebende Eigenschaften aufweisen. Das bedeutet, dass die Porengröße mit der Dimension des zu trennenden Moleküls vergleichbar sein muss.

Membrane auf Kohlenstoffbasis, insbesondere solche mit einer stabilen graphitähnlichen Struktur, scheinen für die oben genannten anspruchsvollen Anwendungen geeignet. Kohlenstoffmembranen sind lange bekannt und werden bereits seit den 1970er Jahren für die Gastrennung erforscht und entwickelt. Zu Beginn wurden selbsttragende Membranen, durch die kontrollierte Pyrolyse von Polymerhohlfasern hergestellt. Die so erhaltenen Hohlfasermembranen aus Kohlenstoff weisen eine viel höhere chemische und thermische Stabilität auf als die Ausgangspolymermembran, zeigten sich aber als mechanisch nicht robust genug für praktische Anwendungen. Daher wird inzwischen in der Regel mittels herkömmlicher Verfahren, wie z.B. Dip-Coating oder Spin-Coating eine dünne Kohlenstoffschicht auf einem porösen Träger (z.B. metallische Träger oder α-Aluminiumoxid) aufgebracht. Dazu wird eine dünne Polymermembranschicht aus einer Lösung eines Polymers in einem geeigneten Lösungsmittel auf dem Träger aufgetragen und gegebenenfalls wird die Polymerschicht ausgehärtet (z.B. durch Quervernetzung) und anschließend pyrolysiert. Diese Herstellungsmethode ist seit langem bekannt und wurde bereits für einige Polymere angewendet, die damit erhältlichen Membranen sind jedoch als echte Molekularsiebmembranen für eine deutliche Trennung der kleinsten Gase durch Molekularsiebung noch nicht ausreichend. Der Grund dafür liegt in der amorphen Struktur solcher Membranen die in der Regel keine strukturellen Porenöffnungen/Kanäle mit einer Größe im Bereich der zu trennenden Gase besitzen. Der Trennmechanismus solcher Membranen basiert hauptsächlich auf Knudsen Diffusion und der Adsorption des polareren Gases (z.B. CO₂) an den Porenwänden, welches aber auch das größte Gas im Gemisch sein kann. Damit ermöglichen solche Membranen nicht gezielt die Abtrennung nach Molekülgröße.

Sowohl die Zeolith-Membranen als auch die amorphen SiO₂-basierten Membranen, die als mögliche Alternativen zu Polymermembranen angedacht waren, weisen den Nachteil auf, dass sie in der Regel nur begrenzt widerstandsfähig gegenüber sauren und alkalischen Lösungen sind. Zudem hat sich herausgestellt, dass eine Anzahl von Zeolith-Membranen und insbesondere die klassischen amorphen SiO₂-Membranen nicht langzeitbeständig sind gegenüber hydrothermalen Bedingungen.

In der Praxis ist der Einsatz von amorphen SiO₂-Membranen durch die besondere Empfindlichkeit des Materials gegenüber Wasser regelmäßig auf trockene Anwendungen begrenzt. Um die Materialstabilität zu vergrößern wurde eine Vielzahl von modifizierten SiO₂-Membranen hergestellt.

Diese umfassen beispielsweise neben amorphem SiOz auch Oxide, wie z. B. ZrOz, oder TiO₂, oder Metalle, wie z. B. Ni oder Co, als zweite Komponente. Allerdings konnten auch dadurch keine geeigneten Membranen mit einer ausreichenden Stabilität und geeigneter Porengrößenverteilung für die Wasser- oder Gastrennung erhalten werden. In den aus der Literatur bekannten mikroporösen keramischen Membranen (z.B. amorphe SiO₂, hybride kohlenstoffhaltige SiOz, Kohlenstoff) umfasst die mesoporöse Schicht in der Regel γ-Aluminiumoxid (γ-Al₂O₃), Titandioxid (TiO₂), Zirkoniumdioxid (ZrO₂), Siliziumoxid (SiOz) oder Mischungen aus den vorgenannten Materialien, die beispielsweise über einen Sol-Gel-Beschichtungsprozess hergestellt werden können. Diese Schichten weisen jedoch regelmäßig eine nur begrenzte chemische (γ-Al₂O₃, SiOz), thermische (TiOz, ZrOz) oder hydrothermale Stabilität auf.

Inzwischen sind auch hybride kohlenstoffhaltige SiOz-Membranen, mit einer verbesserten Widerstandsfähigkeit gegenüber flüssigem Wasser und Wasserdampf bei Temperaturen bis 150°C bekannt (Hybs^{©}). Wegen des teilweisen SiO₂ Charakters dieser Membrane, ist in der Praxis der Anwendungsbereich in Wasser allerdings ebenfalls limitiert. Darüber hinaus ist auch die thermische Stabilität bis maximal 300 °C limitiert, was die Anwendungsmöglichkeiten in der Gastrennung begrenzt. Solche Membranen sind regelmäßig auch nicht in der Lage, die kleinsten Gasmoleküle (He, H₂) von anderen Gasmolekülen (z. B. CO₂, N₂, CH₄) mittels eines Molekularsiebprozesses zu trennen, da die Porengröße typischerweise 0,5 nm überschreitet.

Als Ausgangsmaterial für Kohlenstoffmembrane, haben Graphen und insbesondere dessen oxidierte Form Graphenoxid (GO) enorme Beachtung als mögliches Membranmaterial erfahren. Graphen und Graphenoxid können dabei als eine Membran betrachtet werden, die streng genommen nur eine Atomlage dick ausgestaltet ist. Damit stellen sie die dünnsten, künstlich hergestellten Membranen überhaupt dar.

Unter Graphen versteht man eine 2-dimensionale, einlagige Kohlenstofflage aus sp²-hybridisiertem Kohlenstoff, in der die Kohlenstoffatome in einer Honigwabenstruktur angeordnet sind. Aufgrund dieses wabenförmigen Netzwerks, in dem sehr starke Bindungen bestehen, ist Graphen auch ein sehr starkes und chemisch stabiles Material, weshalb es für die Entwicklung neuer Trennmembranen besonders interessant ist. Graphenoxid stellt die funktionalisierte Form von Graphen dar, bei der zahlreiche sauerstoffhaltige Gruppen, wie z.B. Hydroxyl-, Epoxid-, Carbonyl-, Carboxyl-, Lactone- und Chinone-, sowohl an den Rändern als auch in der Ebene angelagert sind. Graphenoxid weist sowohl sp²- als auch sp³-hybridisierten Kohlenstoff auf.

Graphenoxid kann beispielsweise aus Graphitoxid erhalten werden. Unter Graphitoxid wird dabei eine nichtstöchiometrische Verbindung aus Kohlenstoff, Sauerstoff und Wasserstoff verstanden, deren Summenformel stark mit den Herstellungsbedingungen variiert. Graphitoxid kann wiederum aus Graphit unter Einsatz von starken Oxidationsmitteln gewonnen werden, mittels z. B. den bekannten Synthesemethoden von Brodie-, Hummer- oder Staudenmaier. Bei der Herstellung von Graphitoxid werden die Graphenlagen im Graphit oxygeniert und man erhält ein hydrophiles Material. Eine besondere Eigenschaft des Graphitoxides ist, dass es sich kolloidal in Wasser dispergieren lässt, was zur Bildung kolloider Dispersionen führt. Die Ablösung einzelner Lagen des Graphitoxids, z. B. mittels Ultraschall-Energie, führt zu monolagigem Graphenoxid.

In reinem, einlagigem Graphen oder GO sind die Kohlenstoffatome so dicht angeordnet, dass alle Moleküle, auch das kleinste Gas He, dieses nicht durchdringen können. Folglich kann es potenziell wie eine ein-Atom-dicke Barriereschicht wirken, aber nicht als Molekularsieb. Um zu einer permeablen Membrane zu gelangen wurde daher vorgeschlagen, eine solche Membrane mit kleinen Durchbrüchen zu versehen, die beispielsweise durch Ätzprozesse erfolgen können. Allerdings sind bis jetzt noch keine Methoden bekannt, um die Porenbildung exakt zu kontrollieren. Andere technologische Herausforderungen sind z.B. die großtechnische Fertigung solcher Membranen und deren Robustheit.

Theoretisch scheint eine aus nur wenigen Graphenlagen aufgebaute Membran oder eine Membran aus einigen gestapelten Graphen- oder Graphenoxidlagen besonders gut für die Abtrennung von kleineren Molekülen (He, H₂) aus einer Gasmischung (z. B. mit CO₂, N₂, CO oder auch CH₄) geeignet zu sein, da der Zwischenschichtenabstand zwischen Graphenlagen in der Größenordnung von 0,335 nm liegt. Es wird vermutet, dass der Zwischenschichtenabstand zwischen Graphenoxid-Monolagen in wenig lagigem Graphenoxid und Graphitoxid größer ist, als der zwischen Graphenlagen. In Abhängigkeit von der Anwesenheit von Wasser (Flüssig, Dampf) wird in der Literatur von Zwischenschichtenabständen zwischen Graphenoxid-Monolagen von 0,6 nm bis über 1 nm berichtet.

Daher wurde auch bereits vorgeschlagen, einige Graphen- oder Graphenoxidlagen zu stapeln, um zu sogenanntem wenig lagigem Graphen oder Graphenoxid zu gelangen. Sofern die Lagen kompakt und dicht gestapelt werden, bilden sich laterale Nanokanäle aus, die von kleinen Molekülen, wie beispielsweise He, H₂ oder Wasser passiert werden können, für größere Moleküle jedoch undurchdringlich sind. Eine schematische Darstellung dieses Prinzips zeigt Fig. 3. Normalerweise werden Aggregate aus weniger als 10 Graphen- bzw. Graphenoxidlagen als wenig lagiges Graphen bzw. Graphenoxid bezeichnet. Schichten mit mehr Lagen könnte man regelmäßig als Graphit- bzw. Graphitoxid-Schichten bezeichnen. Solche Membrane haben eine mit Graphit vergleichbare gelagerte Struktur. Die genaue Struktur und Zusammensetzung der einzelnen Graphenoxidlagen ist, im Gegensatz zu Graphenlagen, nicht eindeutig definiert. Im Unterschied zu Graphen, enthält Graphenoxid sp² und sp³ Kohlenstoffatome und deshalb zeigen die Lagen eine nicht-planare, unregelmäßig gewellte Struktur.

Bislang werden bekannte Graphenoxid-Membranen bei Raumtemperatur hergestellt oder nur bei leicht erhöhten Temperaturen bis 220 °C behandelt. Die eingesetzten Trägermaterialien der Graphenoxid-Membranen, z.B. polymere Werkstoffe oder sehr dünne anodische Alumina mit einer wabenartigen Struktur, limitieren für solche Membranen die Einsatztemperaturen. Die typische Herstellungsroute für die vorgenannte Art von Membranen sieht vor, einzelne Graphenoxidschichten über Vakuum-Filtermethoden auf einem Trägermaterial aufzubringen. Bei der Beschichtung wird üblicherweise eine kolloidale Dispersion bestehend aus monolagigem Graphenoxid und Wasser eingesetzt.

Die Herstellungsroute für GO- und Graphen-Membranen ist teilweise identisch und umfasst, das Aufbringen einzelner GO-Schichten auf einem porösen Trägermaterial über bekannte Beschichtungsverfahren, wie z.B. Dip-Coating. Bei der Beschichtung wird eine kolloidale Dispersion bestehend aus monolagigem GO und Wasser eingesetzt. Die daraus resultierenden GO-Membranen weisen insgesamt Eigenschaften auf, die für industrielle Gas- und Wassertrennverfahren von Interesse sind, jedoch für Anwendungen, bei denen Wasser oder feuchte Bedingungen eine Rolle spielen, bestehen weiterhin Bedenken hinsichtlich der Stabilität des Membranmaterials. Es gibt Hinweise darauf, dass GO aufgrund des Vorhandenseins ionisierbarer Funktionalitäten leicht in Wasser dispergiert wird. Dies ist aus prozesstechnischer Sicht von Vorteil, da es die Herstellung stabiler Dispersionen für die Membranbildung erleichtert. Andererseits deutet es auch darauf hin, dass beschichtete GO-Laminate in Wasser redispergieren und desintegrieren können.

Je nach Anwendung ist also anstelle einer GO umfassenden Deckschicht auch eine Ausgestaltung mit einer zumindest teilweise oder vollständig zu Graphen reduzierten Deckschicht wünschenswert. Zum Beispiel, wenn die Empfindlichkeit gegenüber Wasser verringert werden soll und die Wasserdurchlässigkeit nicht unbedingt erforderlich ist, ist die Herstellung einer laminierten Graphenmembran mit einer dem Graphit ähnlichen Struktur eine weitere Möglichkeit. Bei einer solchen Membran ist die Instabilität in Wasser kein Thema, da die Graphenschichten durch Stapelwechselwirkungen zusammenhalten. Der erste Schritt bei der Synthese einer solchen Membran ist identisch mit dem der GO-Membranen, umfassend die Bildung eines laminierten GO-Films auf einem Trägermaterial mittels bekannten Beschichtungsverfahren, wie z.B. Dip-Coating, mit anschließender vollständiger oder teilweiser Reduktion des so entstandene GO-Films zu einer laminierten Graphenstruktur. Dies macht die Membran beständiger gegen chemische Reaktionen und führt darüber hinaus auch zu einer verbesserten Durchlässigkeit der permeierenden Gase (He, H₂), da nach der Reduktion die Graphenlagen nur noch eine geringe Menge an funktionellen Gruppen tragen und dadurch das sterische Hindernis für den Gastransport in die Mikrokanäle verringert wird. Die Auswahl, über welches Verfahren die Reduktion erzielt werden kann (chemisch, thermisch), hängt von der Materialwahl der eingesetzten Trägerschicht und den Zwischenschichten ab. Sofern die Membranstruktur den für die Reduktion notwendigen höheren Temperaturen standhält wird vorzugsweise ein thermisches Verfahren verwendet, weil es viel einfacher ist. Dabei werden die sauerstoffhaltigen Gruppen der Deckschicht in Vakuum oder unter reduzierender Atmosphäre (z.B. Ar/H₂) eliminiert. Für eine vollständige Reduktion sind höhere Temperaturen zwischen 500 und 1000 °C notwendig. Um dies zu ermöglichen wurde eine mehrschichtige Trägerstruktur entwickelt, die neben dem thermisch stabilen makroporösen Träger auch thermisch stabile mesoporose Schichten enthält. Eine solche mehrschichtige Membran ist Gegenstand der WO2016/177355. Die darin beschriebenen Trägerstrukturen bestehen aus Zirkoniumdioxid, insbesondere mit Yttrium stabilisiertem Zirkoniumdioxid (YSZ), wobei sich das so genannte 8YSZ als besonders vorteilhaft herausgestellt hat, da dieses in besonderem Maße thermisch stabil ist.

Eine Membran umfassend eine Graphen-, Graphenoxid- oder Graphit-Deckschicht auf einem Trägermaterial, welche auch bei höheren Temperaturen, Drücken und unter hydrothermalen Bedingungen stabil und einsetzbar ist, sowie Verfahren zu deren Herstellung, beschreibt somit die WO2016/177355. Sollen nach den darin beschriebenen Verfahren dickere Deckschichten aufgebracht werden, so müssen diese in mehreren Verfahrensschritten aufgebracht werden, da die Deckschichten während des Trocknungsprozesses und der thermischen Behandlung regelmäßig zum Reißen neigen. Dieser Effekt limitiert die Schichtdicke.

Obwohl die aus dem Stand der Technik bereits bekannten ein- oder mehrlagigen (geträgerten) Graphen- und Graphenoxid-Membranen sehr vorteilhafte Eigenschaften aufweisen, sind sie für kommerzielle Anwendungsgebiete derzeit noch nicht interessant genug, da sie einige Nachteile mit sich bringen. Dazu gehören:
a) Die Membranen, z.B. die GO- oder Graphen-Trennschichten, sind in der Regel nicht fest (z.B. chemisch) mit dem Träger verbunden.
b) Die Membranen, wie z.B. die GO- oder Graphen-Trennschichten können nicht ultradünn und ausreichend defektfrei auf dem Träger aufgebracht werden.
c) Die Schichtdicke von GO- oder Graphen-Schichten ist aufgrund der Instabilität im Trocknungsprozess limitiert.
d) Die Membranen weisen derzeit noch nicht die Größe und Dimensionen auf, die in industriellen Anlagen benötigt werden.
e) Die Membranen haben insbesondere noch nicht die röhrenförmige Form und Dimension (50 - 150 cm) die in industriellen Anlagen benötigt werden.

Die aus dem Stand der Technik bereits bekannten mehrlagigen geträgerten Graphen- und Graphenoxid-Membranen sind hinsichtlich der Dicke der GO- oder Graphen-Membran limitiert und damit auf extrem dünne Schichten (ca. 10 nm) beschränkt, weshalb solche Membranen bisher nur auf Laborträgern mit einer sehr glatten Oberfläche defektfrei beschichtet werden können. Bei Nutzung kommerzieller Träger, die in der Regel röhrenförmig sind und eine viel geringere Oberflächenqualität aufweisen, leidet die Membran unter Oberflächendefekten und damit einer schlechten Trennleistung.

Darüber hinaus sind Graphen- und Graphenoxid sowie Verfahren zu deren Aufbringen in Schichten zur Herstellung von Membranen vergleichsweise teuer.

Als zusätzliche oder alternative Membranschichtmaterialien wurden bereits Biopolymermaterialien getestet und beschrieben.

Ein Review von T. G. Barclay et al. [T. G. Barclay et al., Adv. Mater Interfaces, 2017, 4 (19), 1601192*]* beschreibt mögliche Anwendungen von Polykatecholaminen, insbesondere Polydopaminen, und deren Einsatzmöglichkeiten zur Oberflächenmodifikation.

Die US2022/0032240A1 beschreibt eine Membran für den Transport von Flüssigphasen, umfassend ein poröses Substrat und eine selektive Transportschicht die 2D-Materialflocken umfasst, welche in dem porösen Substrat vorliegen. Das poröse Substrat weist Oberflächenporen mit Abmessungen von mehr als 2 Mikrometern auf und ist mit der selektiven Transportschicht beschichtet. Dabei kann das 2D-Flockenmaterial Graphen oder Graphenoxid sein und es wird beschrieben, dass Graphenoxid mit Vernetzungsmitteln umfassend Polydopamin vernetzt werden kann.

Die Druckschriften CN116272439A, CN114950154A und CN105536563A beschreiben Trennmembranen auf Basis poröser Substrate mit Polydopamin-Beschichtungen, welche außerdem Graphenoxid-Filme aufweisen können. Die darin aufgebrachten PolydopaminSchichten werden im Herstellverfahren auf maximal 50 °C bzw. 60 °C erhitzt.

Die Druckschrift CN105734725A beschreibt ein Verfahren zur Herstellung eines Vesikelschnur-Kohlenstofffasermaterials. Dabei wird eine Nanofasermembran mittels der *Single-Needle Electrospinning* Methode aus einer Polymerlösung hergestellt und mit einer Eisen-Oxyhydroxidbeschichtung ausgestattet. Diese Membran wird dann in eine Dopaminlösung getaucht, so mit einem Polydopaminfilm beschichtet und karbonisiert. Das erhaltene Vesikelschnur-Kohlenstofffasermaterial dient als elektronisches Bauteil für Superkondensatoren oder Lithium-lonenbatterien.

Die Druckschrift CN115537975A beschreibt ein Verfahren zur Herstellung eines flexiblen, sich selbst stützenden, Stickstoff-dotierten Kohlenstofffaser Kompositmaterials. Eine Lösung aus Dopamin und Polyacrylnitril wird in einem Electrospinning-Verfahren zu einer Kompositfasermembran verarbeitet. Diese Membran wird anschließend mit einer Graphenoxidschicht ausgestattet und auf einer Polytetrafluoroplatte verteilt. Das so erhaltene Komposit wird in mehreren thermischen Behandlungsschritten weiterverarbeitet und karbonisiert. Die Membran findet Anwendung in elektrochemischen Applikationen.

Die Druckschrift KR20180118835A betrifft eine freistehende Membran und ein Herstellverfahren für diese Membran. Ein Substrat aus Graphit, Graphen oder deren Oxiden wird mit einer Schicht aus Benzol-basierten Polymeren durch Plasmapolymerisation beschichtet und dann karbonisiert. Die erhaltene Membran findet Anwendung als ein elektronisches Bauteil für die EUV-Lithographie.

In einer Publikation von P. H. Tchoua Ngamou et al. [P. H. Tchoua Ngamou et al., J. Mater. Sci. A, 2019, 7 (12), 7082-7091*]* wird eine kohlenstoffhaltige molekulare Siebmembran für die Gastrennung beschrieben. Zur Herstellung der Membranen wurde ein Polyimidharz auf einen porösen γ-Al₂O₃ Träger aufgetragen und karbonisiert. Das Dokument verweist auf verschiedene in der Literatur beschriebene Polymerprekursoren auf Basis von Phenolharzen, Polyetherimiden, Polyamidsäure und Polyester.

Die US2018/133659A1 beschreibt kohlenstoffhaltige molekulare Siebmembranen zur Trennung von Gasmischungen beschrieben. Die Druckschrift beschreibt verschiedene mögliche Polymerprekursoren zur Herstellung einer karbonisierten Schicht auf einem porösen keramischen Träger, wie insbesondere Polyacrylonitrile, Polyimide, Poly(furfuryl)alkonole und Phenolharze.

Im Hinblick auf den vorgenannten Stand der Technik ist es also von besonderer Bedeutung, Trennmembranen für die selektive Trennung kleinster Moleküle/Atome (insb. H₂) bereitzustellen, worin die Membran-Trennschicht stabil und defektfrei, vorzugsweise chemisch gebunden, mit den weiteren Schichten, z.B. Trägerschichten, verbunden ist und auch bei der Anwendung als mikroporöse Gas- oder Wasser-Trennmembran stabil verbunden bleibt und sich nicht ablöst und dadurch die Funktionsfähigkeit verliert. Die Trennmembranen sollten insgesamt eine hohe mechanische und/oder chemische Stabilität aufweisen, um unter den erforderlichen Bedingungen, z.B. hohen Temperaturen, Drücken sowie unter feuchten, korrosiven Bedingungen, oder unter dem Einfluß von Chemikalien, insbesondere gegenüber allen Arten von organischen Flüssigkeiten, sowie (nicht stark-oxidierenden) Säuren und Laugen, widerstandsfähig zu sein und zuverlässig zu arbeiten.

Die internationale Anmeldung PCT/EP2024/070540 beschreibt erstmals eine Membran für die Trennung von Gas-, Dampf- und Flüssigkeitsgemischen mit einer Trennschicht auf Basis von karbonisierten Katecholaminen, insbesondere eine Polydopamin-Trennschicht, sowie Verfahren zu deren Herstellung, die in Hinblick auf diese Erfordernisse entwickelt wurde.

### AUFGABENSTELLUNG

Die Aufgabe der vorliegenden Erfindung bestand somit darin, weitere Membranen für die Trennung von Gas-, Dampf- und Flüssigkeitsgemischen bereitzustellen, die die vorgenannten Anforderungen erfüllen und die Nachteile, welche bekannte Membranen aus dem Stand der Technik aufweisen, nicht mehr aufweisen. In einem besonderen Aspekt bestand die Aufgabe darin, Membranen für die Trennung von Gas-, Dampf- und Flüssigkeitsgemischen bereitzustellen welche sich durch eine definierte und einheitliche Porengröße/Breite des Transportkanals mit molekularen Abmessungen auszeichnen. Die Membranen sollten eine hohe Selektivität gegenüber kleinsten Molekülen, insbesondere He, H₂ und H₂O aufweisen. Insbesondere sollten die Membranen auch eine verbesserte Trennleistung an der Trenngrenze zwischen H₂ und CO₂ bzw. zwischen CO₂ und N₂ oder CH₄ und größeren Molekülen aufweisen. Die Membranen sollten entsprechend geeignet sein als echtes Molekularsieb zu wirken. In einem weiteren Aspekt der Erfindung sollte eine neue Membran bereitgestellt werden, welche die Abtrennung von Wasser (z.B. in Form von Dampf) aus Lösungsmittelgemischen ermöglicht, was industriell von hohem Interesse ist. In einem besonderen Aspekt der Erfindung bestand die Aufgabe darin, Membranen für die Trennung von Gas-, Dampf- und Flüssigkeitsgemischen bereitzustellen, welche sehr dünn (ultradünn) und im Wesentlichen defektfrei und ohne signifikante Risse oder Sprünge herstellbar sind. In einem weiteren Aspekt der Erfindung sollten die Membranen auch in Form geträgerter Membranen einsetzbar sein. In einem besonderen Aspekt der Erfindung liegt eine Aufgabe in der Bereitstellung geträgerter Membranen, worin eine defektfreie und stabile (chemische) Verankerung zwischen den Membranschichten und Trägerschichten ermöglicht wird. Die Membranen sollten insbesondere chemisch und mechanisch stabil sein und bevorzugt auch unter feuchten Bedingungen bzw. in flüssigen Systemen einsetzbar sein. Es sollten Membranen herstellbar sein, welche die oben beschriebenen Limitation der Dicke von GO-/Graphen-Schichten aufgrund der Instabilität im Herstellprozess nicht aufweisen. Die Membranen sollten außerdem leicht herstellbar sein und letztlich auch für einen Einsatz im industriellen Maßstab geeignet sein. Dabei war es insbesondere wünschenswert ein vereinfachtes, nachhaltiges, umweltverträgliches und sicheres Herstellverfahren zu entwickeln, welches die Notwendigkeit der Verwendung für Umwelt und Menschen schädlicher Ausgangsverbindungen und Lösungsmittel reduziert.

### BESCHREIBUNG DER ERFINDUNG

Die Aufgaben der vorliegenden Erfindung wurden überraschend gelöst durch die Membranen wie sie in den Ansprüchen beschrieben sind. Insbesondere wurden die oben genannten Aufgaben durch die Entwicklung von Membranen gelöst, welche mindestens eine Schicht karbonisierter Polymere und/oder Copolymere von Verbindungen mit mindestens einer Polyhydroxyphenol-Gruppe aufweisen.

Die vorliegende Erfindung wird nachfolgend näher beschrieben und umfasst insbesondere die folgenden Aspekte:
[1] Membran für die Trennung von Gas-, Dampf- und Flüssigkeitsgemischen (1), umfassend
   - eine oder mehrere poröse keramische Trägerschichten (2) und
   - mindestens eine Schicht (3) enthaltend karbonisierte Polymere und/oder Copolymere von Verbindungen mit mindestens einer Polyhydroxyphenol-Gruppe, wobei Polymere von Katecholaminen ausgenommen sind.
[2] Membran für die Trennung von Gas-, Dampf- und Flüssigkeitsgemischen gemäß [1], worin die Verbindungen mit mindestens einer Polyhydroxyphenol-Gruppe Verbindungen sind, welche mindestens eine di- oder tri-Hydroxyphenolgruppe oder Kombinationen davon aufweisen.
[3] Membran für die Trennung von Gas-, Dampf- und Flüssigkeitsgemischen gemäß [1] oder [2], worin die Verbindungen mit mindestens einer Polyhydroxyphenol-Gruppe Verbindungen sind, welche mindestens eine Polyhydroxyphenolgruppe mit zwei Hydroxygruppen in ortho-Position aufweisen.
[4] Membran für die Trennung von Gas-, Dampf- und Flüssigkeitsgemischen gemäß [1] bis [3], worin die Verbindungen mit mindestens einer Polyhydroxyphenol-Gruppe Verbindungen sind, welche mindestens eine Katechol-Gruppe aufweisen.
[5] Membran für die Trennung von Gas-, Dampf- und Flüssigkeitsgemischen gemäß [1] bis [3], worin die Verbindungen mit mindestens einer Polyhydroxyphenol-Gruppe ausgewählt werden aus der Gruppe umfassend Dopamin, Noradrenalin, Adrenalin, Tannine, Catechine, Kaffeesäure und Chlorogensäure, wobei Polymere von Dopamin, Noradrenalin und Adrenalin ausgenommen sind.
[6] Membran für die Trennung von Gas-, Dampf- und Flüssigkeitsgemischen gemäß [1] bis [5], worin die mindestens eine Schicht (3) enthaltend karbonisierte Polymere und/oder Copolymere von Verbindungen mit mindestens einer Polyhydroxyphenol-Gruppe eine Schicht eines karbonisierten Copolymers von Dopamin und Tannin (Co-PDA-PTA-Polymer) ist.
[7] Membran für die Trennung von Gas-, Dampf- und Flüssigkeitsgemischen gemäß [1] bis [6], welche außerdem eine oder mehrere poröse Zwischenschichten (4) umfasst, welche zwischen einer porösen Trägerschicht (2) und der die karbonisierten Polymere und/oder Copolymere von Verbindungen mit mindestens einer Polyhydroxyphenol-Gruppe enthaltenden Schicht (3) angeordnet sind.
[8] Membran für die Trennung von Gas-, Dampf- und Flüssigkeitsgemischen gemäß [1] bis [7], worin die die karbonisierten Polymere und/oder Copolymere von Verbindungen mit mindestens einer Polyhydroxyphenol-Gruppe enthaltende Schicht als äußere Deckschicht (3a) ausgebildet ist.
[9] Membran für die Trennung von Gas-, Dampf- und Flüssigkeitsgemischen gemäß [1] bis [8], umfassend außerdem eine oder mehrere Schichten (5) welche Graphenoxid, teilweise reduziertes Graphenoxid oder Graphen aufweisen.
[10] Membran für die Trennung von Gas-, Dampf- und Flüssigkeitsgemischen gemäß [1] bis [9], worin die die karbonisierten Polymere und/oder Copolymere von Verbindungen mit mindestens einer Polyhydroxyphenol-Gruppe enthaltende Schicht eine Klebeschicht (3b) bildet, welche zwischen einer porösen keramischen Trägerschicht (2) oder einer porösen Zwischenschicht (4) und einer Deckschicht umfassend Graphenoxid, teilweise reduziertes Graphenoxid oder Graphen (5) angeordnet ist und diese miteinander verbindet.
[11] Membran für die Trennung von Gas-, Dampf- und Flüssigkeitsgemischen gemäß [1] bis [10], worin die karbonisierten Polymere und/oder Copolymere von Verbindungen mit mindestens einer Polyhydroxyphenol-Gruppe mit Graphenoxid, teilweise reduziertem Graphenoxid oder Graphen eine Schicht in Form einer gemischten Matrix (3c) bilden, wobei diese Schicht einer gemischten Matrix (3c) als äußere Deckschicht der Membran ausgebildet ist.
[12] Membran für die Trennung von Gas-, Dampf- und Flüssigkeitsgemischen gemäß [1] bis [11], worin die porösen keramischen Trägerschichten (2) makroporöse Schichten mit Poren mit einem Porendurchmesser > 50 nm sind.
[13] Membran für die Trennung von Gas-, Dampf- und Flüssigkeitsgemischen gemäß [1] bis [12], worin poröse keramische Trägerschichten (2) ausgewählt werden aus der Gruppe makroporöser keramischer Trägerschichten umfassend α-Al₂O₃, TiOz, ZrOz, YSZ, SiOz, CeO₂, MgO, Y₂O₃, Gd₂O₃, Mullit, Cordierit, Zeolith, BaTiO₃, metallische Komponenten, Karbon, SiC, Si₃N₄, SiOC, SiCN, AIN oder Mischungen der vorgenannten Materialien.
[14] Membran für die Trennung von Gas-, Dampf- und Flüssigkeitsgemischen gemäß [1] bis [13], welche eine oder mehrere poröse Zwischenschichten (4) umfasst, welche mesoporöse Schichten mit Poren mit einem mittleren Porendurchmesser von 2 nm bis 50 nm, bevorzugt mit einem mittleren Porendurchmesser von 2 bis 10 nm, sind.
[15] Membran für die Trennung von Gas-, Dampf- und Flüssigkeitsgemischen gemäß [1] bis [14], worin poröse Zwischenschichten (4) ausgewählt werden aus der Gruppe umfassend poröse keramische Zwischenschichten.
[16] Membran für die Trennung von Gas-, Dampf- und Flüssigkeitsgemischen gemäß [1] bis [15], worin poröse Zwischenschichten (4) aus der Gruppe mesoporöser keramischer Zwischenschichten mit Poren mit einem mittleren Porendurchmesser von 2 nm bis 10 nm, bevorzugt mit einem mittleren Porendurchmesser von 2 bis 6 nm, ausgewählt werden.
[17] Membran für die Trennung von Gas-, Dampf- und Flüssigkeitsgemischen gemäß [1] bis [16], worin poröse Zwischenschichten (4) ausgewählt werden aus der Gruppe mesoporöser keramischer Zwischenschichten umfassend γ-Al₂O₃, TiO₂, ZrOz, YSZ, SiO₂, CeO₂, MgO, Y₂O₃, Gd₂O₃, ZnO, SnO₂, Mullit, Cordierit, Zeolith, Metal-Organic Framework Materialien (MOF), Ton, BaTiO₃, Karbon, SiC, Si₃N₄, SiOC, SiCN, AIN oder Mischungen der vorgenannten Materialien.
[18] Membran für die Trennung von Gas-, Dampf- und Flüssigkeitsgemischen gemäß [1] bis [17], welche eine oder mehrere Schichten (5) umfasst, welche Graphenoxid, teilweise reduziertes Graphenoxid oder Graphen aufweisen und welche mikroporöse Schichten mit Poren/Transportkanälen mit einem mittleren Durchmesser < 1 nm sind.
[19] Membran für die Trennung von Gas-, Dampf- und Flüssigkeitsgemischen gemäß [1] bis [18], worin die Schichten (5), umfassend Graphenoxid, teilweise reduziertes Graphenoxid oder Graphen, monolagig oder mehrlagig sind.
[20] Membran für die Trennung von Gas-, Dampf- und Flüssigkeitsgemischen gemäß [1] bis [19], umfassend wenigstens zwei poröse Zwischenschichten (4), bei denen in Richtung der die karbonisierten Polymere und/oder Copolymere von Verbindungen mit mindestens einer Polyhydroxyphenol-Gruppe enthaltenden Schicht (3, 3a, 3b, 3c) sowohl die Teilchengröße, die Rauheit als auch die Porengröße abnimmt.
[21] Membran für die Trennung von Gas-, Dampf- und Flüssigkeitsgemischen gemäß [1] bis [20], umfassend wenigstens zwei poröse Zwischenschichten (4), von denen eine erste poröse Zwischenschicht (4) in Kontakt mit einer porösen keramischen Trägerschicht (2) und eine zweite poröse Zwischenschicht (4) in Kontakt mit der die karbonisierten Polymere und/oder Copolymere von Verbindungen mit mindestens einer Polyhydroxyphenol-Gruppe enthaltenden Schicht (3, 3a, 3b, 3c) steht, und wobei wenigstens eine Zwischenschicht (4) Poren mit einem mittleren Porendurchmesser kleiner als 5 nm aufweist.
[22] Membran für die Trennung von Gas-, Dampf- und Flüssigkeitsgemischen gemäß [21], worin die erste poröse Zwischenschicht (4) eine Schichtdicke zwischen 1 µm und 20 µm und/oder worin die zweite poröse Zwischenschicht (4) eine Schichtdicke zwischen 0,1 µm und 2 µm aufweist.
[23] Membran für die Trennung von Gas-, Dampf- und Flüssigkeitsgemischen gemäß [1] bis [22], welche eine mikroporöse Schicht (5), umfassend Graphenoxid, teilweise reduziertes Graphenoxid oder Graphen, aufweist und wobei diese Schicht (5) eine Schichtdicke zwischen 3 nm und 2 µm, bevorzugt zwischen 5 nm und 300 nm, bevorzugter zwischen 5 nm und 10 nm aufweist.
[24] Membran für die Trennung von Gas-, Dampf- und Flüssigkeitsgemischen gemäß [1] bis [23], umfassend eine mehrlagige mikroporöse Schicht (5) welche zwischen 5 und 1000 Lagen an Graphenoxid, teilweise reduziertem Graphenoxid oder Graphen aufweist.
[25] Membran für die Trennung von Gas-, Dampf- und Flüssigkeitsgemischen gemäß [1] bis [24], worin die die karbonisierten Polymere und/oder Copolymere von Verbindungen mit mindestens einer Polyhydroxyphenol-Gruppe enthaltende Schicht (3, 3a, 3b, 3c) eine Schichtdicke > 20 nm, bevorzugt ≥ 25 nm, noch bevorzugter ≥ 50 nm aufweist.
[26] Membran für die Trennung von Gas-, Dampf- und Flüssigkeitsgemischen gemäß [1] bis [25], worin die die karbonisierten Polymere und/oder Copolymere von Verbindungen mit mindestens einer Polyhydroxyphenol-Gruppe enthaltende Schicht (3, 3a, 3b, 3c) eine Schichtdicke < 1000 nm, bevorzugt ≤ 500 nm, noch bevorzugter ≤ 300 nm aufweist.
[27] Membran für die Trennung von Gas-, Dampf- und Flüssigkeitsgemischen gemäß [1] bis [24], worin die die karbonisierten Polymere und/oder Copolymere von Verbindungen mit mindestens einer Polyhydroxyphenol-Gruppe enthaltende Schicht (3, 3a, 3b, 3c) eine Schichtdicke zwischen 3 nm und 1000 nm, bevorzugt zwischen 5 nm und 500 nm, bevorzugter zwischen 10 nm und 300 nm, am bevorzugtesten zwischen 25 nm und 100 nm aufweist.
[28] Membran für die Trennung von Gas-, Dampf- und Flüssigkeitsgemischen gemäß [1] bis [24], worin die die karbonisierten Polymere und/oder Copolymere von Verbindungen mit mindestens einer Polyhydroxyphenol-Gruppe enthaltende Schicht (3, 3a, 3b, 3c) eine Schichtdicke zwischen 25 nm und 500 nm, bevorzugt zwischen 25 nm und 300 nm, bevorzugter zwischen 25 nm und 200 nm, noch bevorzugter zwischen 25 nm und 100 nm aufweist.
[29] Membran für die Trennung von Gas-, Dampf- und Flüssigkeitsgemischen gemäß [1] bis [28], worin die Schicht (5), welche Graphenoxid, teilweise reduziertes Graphenoxid oder Graphen aufweist, als äußere Deckschicht der Membran angeordnet ist
[30] Membran für die Trennung von Gas-, Dampf- und Flüssigkeitsgemischen gemäß [1] bis [29], welche erhältlich ist durch Herstellung einer mehrlagigen Anordnung der gemäß [1] bis [29] vorgesehenen Schichten (2, 4, 5) sowie einer Schicht von Polymeren und/oder Copolymeren von Verbindungen mit mindestens einer Polyhydroxyphenol-Gruppe und Erhitzen der mehrlagigen schichtförmigen Anordnung auf eine Temperatur zwischen 60 und 450°C, bevorzugt zwischen 100 und 400°C, bevorzugter zwischen 150 und 250 °C, in Luft unter Erhalt einer thermisch stabilen Schicht von Polymeren und/oder Copolymeren von Verbindungen mit mindestens einer Polyhydroxyphenol-Gruppe (3, 3a, 3b, 3c), und worin nach dem Erhitzen der mehrlagigen schichtförmigen Anordnung auf eine Temperatur zwischen 60 und 450 °C, bevorzugt zwischen 100 und 400°C, bevorzugter zwischen 150 und 250 °C, in Luft eine weitere thermische Behandlung unter Erhitzung auf mindestens 300°C, bevorzugt auf mindestens 500 °C, vorzugsweise auf eine Temperatur zwischen 500 und 1000 °C, erfolgt, unter Karbonisierung der Polymere und/oder Copolymere der Verbindungen mit mindestens einer Polyhydroxyphenol-Gruppe und Erhalt der Schicht karbonisierter Polymere und/oder Copolymere von Verbindungen mit mindestens einer Polyhydroxyphenol-Gruppe (3, 3a, 3b, 3c).
[31] Membran gemäß [30] worin die Karbonisierung in einer inerten oder reduktiven Atmosphäre durchgeführt wird.
[32] Membran gemäß [1] bis [31], welche in Form einer zylindrischen Röhre vorliegt.
[33] Verfahren zur Herstellung der Membranen gemäß [1] bis [32], umfassend die Schritte
   (a) Bereitstellung oder Herstellung einer porösen keramischen Trägerschicht (2),
   (b) gegebenenfalls Aufbringen einer oder mehrerer poröser Zwischenschichten (4) auf der porösen keramischen Trägerschicht (2),
   (c) Aufbringen von Verbindungen mit mindestens einer Polyhydroxyphenol-Gruppe auf der porösen keramischen Trägerschicht (2) oder einer gegebenenfalls vorgesehenen porösen Zwischenschicht (4), entweder
      ∘ in Form einer wässrigen Lösung der Verbindungen mit mindestens einer Polyhydroxyphenol-Gruppe, und anschließender Polymerisation und/oder Copolymerisation in-situ, oder
      ∘ in Form einer wässrigen Dispersion oder Suspension von bereits polymerisierten und/oder copolymerisierten Partikeln der Verbindungen mit mindestens einer Polyhydroxyphenol-Gruppe,
      wobei eine Polymerisation von Katecholaminen ausgenommen ist,
   (d) Thermische Behandlung bei 60 bis 450°C, bevorzugt 100 bis 400°C, bevorzugter 150 bis 250°C, in Luft, und
   (e) ggf. (bevorzugt) Karbonisierung der Polymere und/oder Copolymere der Verbindungen mit mindestens einer Polyhydroxyphenol-Gruppe bei einer Temperatur zwischen 300 und 100 °C, bevorzugt zwischen 500 und 1000 °C unter Erhalt einer Schicht karbonisierter Polymere und/oder Copolymere von Verbindungen mit mindestens einer Polyhydroxyphenol-Gruppe (3).
[34] Verfahren gemäß [33], umfassend außerdem einen Schritt des Aufbringens einer Schicht (5) umfassend Graphenoxid, teilweise reduziertes Graphenoxid oder Graphen.
[35] Verfahren gemäß [33] oder [34], worin nach Schritt (d) eine wässrige kolloidale Dispersion von Graphenoxid auf der Schicht der polymerisierten und/oder copolymerisierten Verbindungen mit mindestens einer Polyhydroxyphenol-Gruppe aufgebracht wird und anschließend ggf. (bevorzugt) der Schritt (e) der Karbonisierung erfolgt unter Erhalt einer Membran mit einer Schicht thermisch stabilisierter (bevorzugt karbonisierter) Polymere und/oder Copolymere von Verbindungen mit mindestens einer Polyhydroxyphenol-Gruppe in Form einer Klebeschicht (3b) und einer darüber angeordneten Deckschicht (5) umfassend Graphenoxid, teilweise reduziertes Graphenoxid oder Graphen.
[36] Verfahren gemäß [33] oder [34], worin im Schritt (c) in eine wässrige Lösung der Verbindungen mit mindestens einer Polyhydroxyphenol-Gruppe Graphenoxidpartikel eingemischt werden und diese Mischung anschließend in-situ polymerisiert und/oder copolymerisiert wird, gefolgt von der thermischen Behandlung in Schritt (d) und ggf. (bevorzugt) der Karbonisierung in Schritt (e) unter Erhalt einer Membran mit einer Schicht in Form einer gemischten Matrix (3c) thermisch stabilisierter (bevorzugt karbonisierter) Polymere und/oder Copolymere von Verbindungen mit mindestens einer Polyhydroxyphenol-Gruppe mit Graphenoxid, teilweise reduziertem Graphenoxid oder Graphen (3c).
[37] Verfahren gemäß [34] bis [36], worin Graphenoxid in Form einer wässrigen kolloidalen Dispersion von Graphenoxidpartikeln mit einer Partikelgröße zwischen 10 nm und 5 µm eingesetzt wird.
[38] Verfahren gemäß [34] bis [37], worin Graphenoxid in Form einer wässrigen kolloidalen Dispersion mit einem Feststoffgehalt von Graphenoxidpartikeln zwischen 20 mg und 2 g pro Liter kolloidale Dispersion eingesetzt wird.
[39] Verfahren gemäß [33] bis [38], umfassend Schritt (e), wobei die Karbonisierung in reduzierender Atmosphäre unter Argon / 3% H₂ erfolgt und im Fall des Vorliegens einer Schicht enthaltend Graphenoxid dieses zumindest teilweise zu Graphen reduziert wird.
[40] Verfahren gemäß [33] bis [39], worin das Aufbringen der Schicht (3), enthaltend die Verbindungen mit mindestens einer Polyhydroxyphenol-Gruppe, und/oder der Schicht (5), enthaltend Graphenoxid, teilweise reduziertes Graphenoxid oder Graphen, unabhängig voneinander jeweils mittels Eintauchen, Tauchverfahren, Dip-Coating, Spin-Coating, Sprühen, Roller-Coating, Tintenstrahldruck oder Vakuumfiltration erfolgt.
[41] Verfahren gemäß [33] bis [40], worin Trägermaterialien in Form zylindrischer Röhren in dem Beschichtungsverfahren eingesetzt werden.
[42] Verfahren gemäß [33] bis [41], worin in Schritt (c) außerdem ein Oxidationsmittel, bevorzugt Ammoniumpersulfat, zugesetzt wird.
[43] Verfahren gemäß [33] bis [42], worin in Schritt (c) die Verbindungen mit mindestens einer Polyhydroxyphenol-Gruppe Verbindungen sind, welche mindestens eine di- oder tri-Hydroxyphenolgruppe oder Kombinationen davon aufweisen, bevorzugt Verbindungen welche mindestens eine Polyhydroxyphenolgruppe mit zwei Hydroxygruppen in ortho-Position aufweisen, bevorzugter werden in Schritt (c) zwei unterschiedliche Verbindungen mit mindestens einer Polyhydroxyphenol-Gruppe zur Bildung einer Schicht eines karbonisierten Copolymers eingesetzt, noch bevorzugter werden in Schritt (c) Verbindungen mit mindestens einer Polyhydroxyphenol-Gruppe eingesetzt, welche mindestens eine Katechol-Gruppe aufweisen, besonders bevorzugt werden in Schritt (c) Verbindungen mit mindestens einer Polyhydroxyphenol-Gruppe ausgewählt aus der Gruppe umfassend Dopamin, Noradrenalin, Adrenalin, Tannine, Catechine, Kaffeesäure und Chlorogensäure eingesetzt, ganz besonders bevorzugt werden in Schritt (c) Dopamin und Tannin zur Herstellung eines Copolymers (Co-PDA-PTA-Polymer) eingesetzt.
[44] Membran erhältlich aus Schritt (d) eines Verfahrens gemäß [33] bis [38] und [40] bis [43], umfassend eine Schicht thermisch stabilisierter Polymere und/oder Copolymere von Verbindungen mit mindestens einer Polyhydroxyphenol-Gruppe (3).
[45] Verwendung der Membranen gemäß [1] bis [32], welche eine Schicht karbonisierter Polymere und/oder Copolymere von Verbindungen mit mindestens einer Polyhydroxyphenol-Gruppe aufweisen, als Molekularsiebmembran zur Abtrennung von He und/oder H₂ oder H₂O.
[46] Verwendung der Membranen gemäß [1] bis [32], welche eine Schicht karbonisierter Polymere und/oder Copolymere von Verbindungen mit mindestens einer Polyhydroxyphenol-Gruppe und bevorzugt mindestens eine Schicht (5) umfassend Graphenoxid, teilweise reduziertes Graphenoxid oder Graphen aufweisen, als Molekularsiebmembran zur Abtrennung von He, H₂ und/oder CO₂.
[47] Verwendung einer Membran gemäß [44], welche eine Schicht thermisch stabilisierter Polymere und/oder Copolymere Verbindungen mit mindestens einer Polyhydroxyphenol-Gruppe (3) aufweist, als Membran zur Abtrennung von H₂O aus Lösungsmittelgemischen oder von Dampfgemischen oder feuchten Gasgemischen.
[48] Verfahren zur Abtrennung von He, H₂ und/oder CO₂ oder von H₂O aus Gas-, Dampf- und Flüssigkeitsgemischen mittels einer Molekularsiebmembran gemäß [1] bis [32] und [44].
[49] Verfahren zur Abtrennung von CO₂ aus Gas-, Dampf- und Flüssigkeitsgemischen bei Temperaturen oberhalb von Raumtemperatur mittels einer Molekularsiebmembran gemäß [1] bis [32] welche bevorzugt mindestens eine Schicht (5) umfassend Graphenoxid, teilweise reduziertes Graphenoxid oder Graphen aufweist.

### DETAILLIERTE BESCHREIBUNG DER ERFINDUNG

Die erfindungsgemäßen Aufgaben werden durch den Einsatz von Trennschichten auf Basis karbonisierter Polymere und/oder Copolymere von Verbindungen mit mindestens einer Polyhydroxyphenol-Gruppe, insbesondere auf Basis karbonisierter Copolymere von Dopamin und Tannin, in Membranen zur Trennung von Gas-, Dampf- und Flüssigkeitsgemischen gelöst.

Die Erfinder der vorliegenden Erfindung fanden überraschend, dass karbonisierte Polymere und/oder Copolymere von Verbindungen mit mindestens einer Polyhydroxyphenol-Gruppe besonders geeignet sind, auf festen anorganischen (keramischen) Substraten zu haften und eine feste und stabile Verbindung insbesondere mit den porösen Schichten bekannter Membranen einzugehen.

In der internationalen Anmeldung PCT/EP2024/070540 wurde bereits beschrieben, dass Polydopamin (PDA) durch oxidative Polymerisation des Katecholamins Dopamin in Wasser bei alkalischem pH-Wert effektiv auf herkömmlichen porösen Membranträgern aufgetragen werden kann und durch Karbonisierung das PDA in eine gassiebende Kohlenstoffmembranschicht mit überraschend hoher Selektivität für die kleinsten Gase, inklusive Helium und Wasserstoff, konvertiert werden kann. Die vorliegende Erfindung zeigt, dass neben Polymeren von Katecholaminen auch Polymere weiterer Verbindungen mit mindestens einer Polyhydroxyphenol-Gruppe sowie Copolymere solcher Verbindungen mit mindestens einer Polyhydroxyphenol-Gruppe durch Karbonisierung als gassiebende Kohlenstoffmembranschichten mit hoher Selektivität für die kleinsten Gase eingesetzt werden können. So konnte am Beispiel einer Membrananordnung mit einer Schicht eines karbonisierten Copolymers von Dopamin und Tannin gezeigt werden, dass weitere karbonisierte Polymere sowie Copolymere von Verbindungen mit mindestens einer Polyhydroxyphenol-Gruppe vorteilhaft zur Verbesserung bekannter Membranen, insbesondere Graphenoxid- und Graphen-Membranen, eingesetzt werden können.

Die erfindungsgemäße Gruppe der Verbindungen mit mindestens einer Polyhydroxyphenol-Gruppe zur Bildung der karbonisierten Polymer- oder Copolymerschichten umfasst solche, welche polymerisierbar bzw. copolymerisierbar sind. Besonders geeignet sind Verbindungen die mindestens eine di-, tri- oder tetra-Hydroxyphenolgruppe als funktionelle Gruppe aufweisen, welche über die Phenol-gebundenen OH-Gruppen (co-)polymerisierbar sind. Dabei sind besonders bevorzugt Verbindungen mit Polyhydroxyphenol-Gruppen worin zwei OH-Gruppen in ortho-Position am Phenolring gebunden sind.

Die in den Membranen der internationalen Anmeldung PCT/EP2024/070540 eingesetzten Katecholamine weisen den diesen Stoffen gemeinsamen Molekülbestandteil Brenzcatechin (1,2-Dihydroxybenzol / 1,2-Dihydroxybenzen / Benzen-1,2-diol, englische Bezeichnung Catechol), und eine Aminogruppe auf. Beispiele umfassen neben Dopamin außerdem Noradrenalin und Adrenalin, sowie Derivate davon, aber auch Vorstufen wie DOPA (3,4-Dihydroxyphenylalanin).

| | |
|---|---|
| 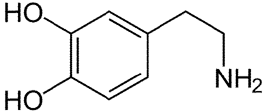 | 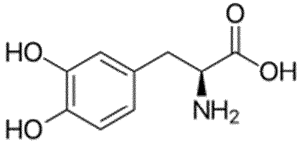 |
| Dopamin | DOPA |
| 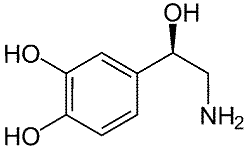 | 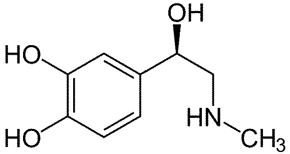 |
| Noradrenalin | Adrenalin |

DOPA ist der Präkursor für die Biosynthese der natürlich vorkommenden Katecholamine und hat eine fast identische Struktur. DOPA ist auch der Hauptbestandteil des Fußpolymers, das für die Adhäsion von Muscheln an einer Oberfläche verantwortlich ist. Entsprechend umfasst die Gruppe polymerisierter Katecholamine Polydopamin, Polynoradrenalin, Polyadrenalin, und Derivate davon. Derivate der Katecholamine bzw. der polymerisierten Katecholamine umfassen im Grunde alle chemisch möglichen und sinnvollen Abwandlungen dieser Verbindungen, sofern die für die starke Oberflächenhaftung dieser Verbindungsklasse maßgeblichen funktionellen Gruppen der primären und sekundären Amine sowie Katechol(3,4-Dihydroxybenzol) in ausreichend hoher Menge in den Derivaten erhalten geblieben sind. Polymere der bereits in der internationalen Anmeldung PCT/EP2024/070540 eingesetzten Katecholamine (inklusive der darin beschriebenen Derivate und Vorstufen) sind vom Umfang der vorliegenden Erfindung ausgenommen, nicht jedoch Copolymere mit solchen Katecholaminen, Derivaten und Vorstufen davon. Die vorgenannten Katecholamine wie Dopamin, Noradrenalin und Adrenalin, sowie deren Derivate und Vorstufen sind katecholhaltige Biomoleküle und können zur Bildung von Copolymeren zur Herstellung erfindungsgemäßer karbonisierter Copolymere eingesetzt werden, indem sie miteinander oder mit anderen erfindungsgemäß umfassten Verbindungen mit mindestens einer Polyhydroxyphenol-Gruppe copolymerisiert und anschließend karbonisiert werden.

Die erfindungsgemäße Gruppe der polymerisierbaren / copolymerisierbaren Verbindungen mit mindestens einer Polyhydroxyphenol-Gruppe umfasst neben den vorgenannten Katecholaminen außerdem solche Verbindungen, die mindestens eine Polyhydroxyphenolgruppe aufweisen, beispielsweise eine oder mehrerer gleicher oder unterschiedliche der nachfolgenden Polyhydroxyphenolgruppen:

| | | |
|---|---|---|
| 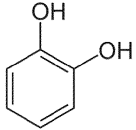 | 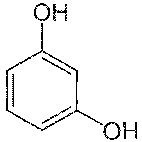 | 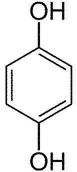 |
| 1,2-Dihydroxybenzol (Katecholgruppe) | 1,2,4-Trihydroxybenzol | 1,3,5-Trihydroxybenzol |
| 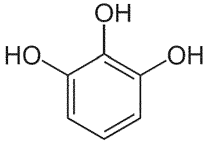 | 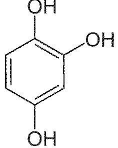 | 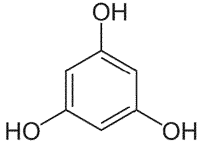 |
| 1,2,3-Trihydroxybenzol | 1,2,4-Trihydroxybenzol | 1,3,5-Trihydroxybenzol |
| 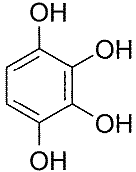 | 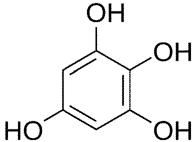 | 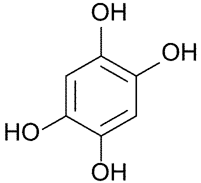 |
| 1,2,3,4-Tetrahydroxybenzol | 1,2,3,5-Tetrahydroxybenzol | 1,2,4,5-Tetrahydroxybenzol |

Bevorzugt sind Verbindungen mit mindestens einer Polyhydroxyphenolgruppe, worin wenigstens zwei OH-Gruppen in benachbarter Position zueinander am Phenolring gebunden sind. Besonders bevorzugt sind Verbindungen mit Polyhydroxyphenol-Gruppen die eine ähnliche Struktur wie die Katecholamine aufweisen, jedoch kein Amin sondern nur eine oder mehrere Katechol-Gruppen besitzen.

Verbindungen mit Polyhydroxyphenol-Gruppen sind in viel pflanzlichen Organismen vorhanden und werden daher häufig auch als "Biomoleküle" bezeichnet. Viele solcher Biomoleküle sind z.B. für ihre positiven und antioxidativen Eigenschaften in Lebensmitteln und Säften bekannt. Beispiele umfassen Polyphenole, wie Tannine, die z.B. in Holz und Früchten wie z.B. Trauben von Weinpflanzen vorkommen. Weitere Beispiele umfassen Biomoleküle aus der Gruppe der Flavonoide mit Catechinen, die beispielsweise in Kakaobohnen und Teeblättern vorkommen oder Derivate von Cholorogensäure wie Kaffeesäure aus Kaffeebohnen sowie Verbindungen mit Gallussäure-Einheiten, die Baustein der pflanzlichen Gerbstoffgruppe der Gallotannine ist.

| | |
|---|---|
| 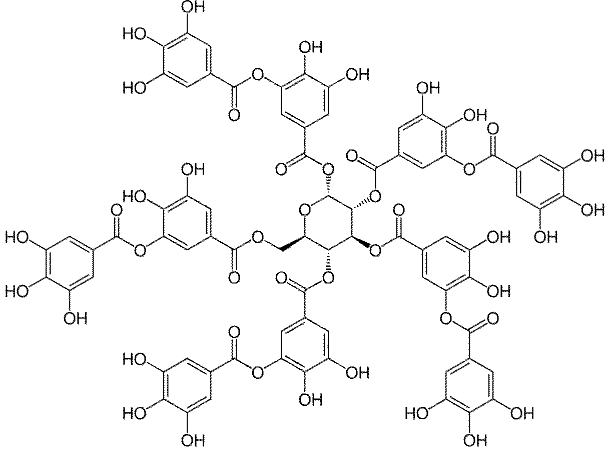 | |
| Tannin | |
| 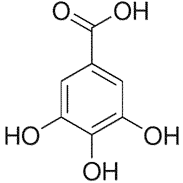 | 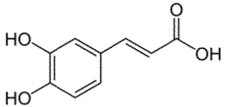 |
| Gallussäure | Kaffeesäure |

Es wurde bereits in der Literatur berichtet, dass verschiedene pflanzliche phenolische Biomoleküle in der Lage sind, aus wässrigen Lösungen dünne Biopolymer-Filme auf dichten Model-Substraten wie z.B. Glas zu bilden. Dabei wird ein ähnlicher oxidativer Polymerisationsprozess wie bei Katecholaminen vermutet. Die bekannteste und erfindungsgemäß bevorzugte katecholhaltige Verbindung ist Tanninsäure, oft nur "Tannin" genannt, das für die Weinherstellung von besonderer Bedeutung ist. Tannin polymerisiert zu Polytannin (PTA) und ist aufgrund seiner antioxidativen, antibakteriellen, antimykotischen und antiviralen Eigenschaften in der Medizin bereits relativ gut untersucht. Außerdem wurden Versuche unternommen, Copolymere von Polydopamin und Tannin herzustellen, um die besonderen Eigenschaften beider Materialien zu kombinieren, z.B. für Klebstoffe zum Einsatz in der Wundheilung. Darüber hinaus ist die Verwendung von Tannin in der Membrantechnologie bekannt, wo Tannin als Substratmodifikator zur Veränderung der Oberflächeneigenschaften von Polymermembranen durch Hydrophilierung hydrophober organischer Polymermembranen eingesetzt wird. Desweiteren wurden großporige Membranen basierend auf Tannin bereits für die Filtration von großen Molekülen aus strömendem Wasser untersucht. Unter den erfindungsgemäßen Verbindungen mit mindestens einer Polyhydroxyphenol-Gruppe ist Tannin besonders bevorzugt, insbesondere als Baustein in einem Copolymer mit Dopamin.

Im Gegensatz zu den bekannten Einsatzgebieten von PTA oder Tannin-Dopamin Copolymeren wird dies in den erfindungsgemäßen Membranschichten karbonisiert. Dabei können entweder reine PTA-Schichten karbonisiert werden oder, was erfindungsgemäß bevorzugt ist, Copolymere von PTA mit PDA (nachfolgend auch als Co-PDA-PTA-Polymer bezeichnet). Aus der Literatur auf dem Gebiet der Batteriematerialien ist bekannt, dass PTA, wie auch bei Polydopamin, durch thermische Behandlung bei Temperaturen von 500 bis 1000°C in einer inerten oder reduktiven Atmosphäre karbonisiert und in eine leitfähige Form mit einer geschichteten Kohlenstoffstruktur umgewandelt wird.

Die erfindungsgemäß Polyhydroxyphenol-haltigen Verbindungen sind nicht auf natürliche vorkommende oder aus Naturstoffen gewonnene Biomoleküle beschränkt. Solche Verbindungen können prinzipiell auch chemisch oder biochemisch synthetisiert werden.

DOPA (3,4-Dihydroxyphenylalanin), der Präkursor für die Bildung von Dopamin und dadurch auch andere natürlich vorkommende Katecholamine, ist der Hauptbestandteil des Fußpolymers, das für die Adhäsion von Muscheln an einer Oberfläche verantwortlich ist, und dies ist in der Lage in Wasser eine Art biologischen Superkleber zu bilden. Dabei ist die wichtigste Komponente für die Haftfähigkeit des Muschelsekrets das DOPA [H. Lee et al., Science, 2007, 5849, 426-430*;* J. Zhang et al., RSC Adv., 2020, 10, 12035]*.* Lee et al. (2007) beschreiben außerdem eine einfache Synthesemethode zur Herstellung von synthetischem Polydopamin (PDA) für Anwendungen in der Materialwissenschaft. Zahlreiche Forschergruppen haben unter Anwendung der gleichen Methode die Eignung von PDA als stark haftendes Beschichtungsmaterial für ein breites Spektrum von Oberflächenbehandlungen auf diversen Arten von Oberflächen gezeigt. Aufgrund der Verwendung eines Polymers und seiner besonderen Eigenschaften, welche aus der Natur abgeleitet sind, wird PDA auch häufig als "Bioinspiriertes Polymer" oder als "Bio-Kleber" oder auch einfach als "Muschel-Kleber" bezeichnet.

Insbesondere haben Lee et al. (2007) demonstriert, dass Dopamin, die monomere Form von PDA, in einer mildalkalischen wässrigen Lösung (pH 8 - 9) und in der Anwesenheit von (Luft)sauerstoff oxidiert und selbstpolymerisiert, und spontan eine PDA-Beschichtung mit großer Haftkraft bildet. Dieses Verhalten ist zurückzuführen auf die chemische Zusammensetzung von PDA, die zwei wesentliche Merkmale aufweist: einen, hohen Gehalt an primären und sekundären Aminen und einen hohen Gehalt an Katechol(3,4-Dihydroxybenzol). Es wird davon ausgegangen, dass die Koexistenz dieser beiden Typen von funktionellen Gruppen zu der starken Oberflächenhaftung von PDA beiträgt.

Zwar wurde nach der Arbeit von Lee et al. (2007) die von Muscheln inspirierte Beschichtungstechnik in vielen Bereichen der Materialwissenschaft angewandt, im Bereich der Trennmembranen wurden jedoch bisher nur wenige Studien durchgeführt und diese beschränken sich auf das Gebiet der Polymermembranen. Darin dient die Beschichtung von PDA typischerweise dazu, den hydrophoben Charakter von Membranoberflächen in einen hydrophilen zu verändern. PDA wird darin also als Oberflächenmodifikator eingesetzt und nicht als Klebe- oder Trennschicht. Solche bekannten Polymermembran-Anwendungen mit PDA-Beschichtungen zeichnen sich dadurch aus, dass lediglich eine nasse Aufbringung der PDA-Schichten ohne Temperaturbehandlung beschrieben wurde, wodurch die erhaltenen PDA-Schichten (thermisch) instabil sind.

Die Gruppe der erfindungsgemäßen Verbindungen mit mindestens einer Polyhydroxyphenol-Gruppe umfasst insbesondere solche Verbindungen, die in der Lage sind Biopolymerfilme zu bilden.

Die in der internationalen Anmeldung PCT/EP2024/070540 beschriebenen karbonisierten Polydopaminschichten bilden vergleichsweise kompakte Membranen. Zur Optimierung der Trenneigenschaften und Selektivität war es wünschenswert, offenere Membrane herzustellen, um den Anwendungsbereich von Membranen mit karbonisierter PDA-Schicht zu erweitern und beispielsweise die CO₂-Permeation zu erhöhen und auch eine selektive Trennung zwischen CO₂ und N₂ oder CH₄ bzw. zwischen H₂ und CO₂ zu erreichen. Hierzu wurden die erfindungsgemäßen Polymere und/oder Copolymere von Verbindungen mit mindestens einer Polyhydroxyphenol-Gruppe eingesetzt, wobei sich insbesondere Tannin als besonders geeignet herausgestellt hat, da es im Vergleich zu Dopamin ein größeres Molekül ist und aufgrund seiner Struktur chemisch sehr kompatibel mit Katecholaminen wie Dopamin ist um Copolymere wie Co-PDA-PTA-Polymere zu bilden. Tannin enthält neben einem sehr hohen Gehalt an Katechol auch Trihydroxyphenyl (Gallussäure) Einheiten, und verfügt damit über eine große Anzahl reaktiver Stellen für die Copolymerisationsreaktion mit Katecholaminen wie Dopamin.

Die chemischen Synthese- und Bindungsprozesse, die die guten Haft- und Klebeeigenschaften von PDA bei der Schichtbildung bedingen, sind komplex und heute noch nicht vollständig geklärt. Ohne an diese Theorie gebunden zu sein wird jedoch angenommen, dass die Katecholgruppe eine wichtige Rolle bei der Haftung an der Oberfläche spielt. Katecholgruppen sind Bestandteil diverser phenolischer Biomoleküle, weshalb sich die Gruppe von Verbindungen mit einer oder mehreren Katecholgruppen erfindungsgemäß besonders zur Herstellung der erfindungsgemäßen karbonisierten Polymere und/oder Copolymere von Verbindungen mit mindestens einer Polyhydroxyphenol-Gruppe eignet.

Die erfindungsgemäßen Verbindungen mit mindestens einer Polyhydroxyphenol-Gruppe die von den vorgenannten Biomolekülen abgeleitet sind weisen neben ihren Klebeeigenschaften auf anorganischen Oberflächen insbesondere auch den Vorteil auf, dass sie in Wasser löslich sind. Insbesondere die bevorzugten Polymer- bzw. Copolymerbausteine Tannin und Dopamin sind sehr gut wasserlöslich. Dies ermöglicht es die erfindungsgemäßen Schichten der karbonisierten Polymere und/oder Copolymere der Verbindungen mit mindestens einer Polyhydroxyphenol-Gruppe aus einer wässrigen Lösung heraus auf die weiteren Membranschichten bzw. Trägermaterialien aufzubringen. Der Einsatz von Wasser als Lösemittel ist für industrielle Anwendungen aufgrund der Verfügbarkeit und ausgesprochen einfachen Handhabung von Wasser als Lösemittel stets bevorzugt.

Durch starke Erhitzung und Pyrolyse werden die aufgebrachten Polymere und/oder Copolymere der Verbindungen mit mindestens einer Polyhydroxyphenol-Gruppe zu Kohlenstoff oder Stickstoff enthaltendem Kohlenstoff umgesetzt und karbonisiert.

Erfindungsgemäß bevorzugte Copolymere werden durch Copolymerisierung von Dopamin, aus der Gruppe der Katecholamine, mit Tannin hergestellt (Co-PDA-PTA-Polymer).

Die Erfinder der vorliegenden Erfindung haben Polymere und Copolymere von Verbindungen mit mindestens einer Polyhydroxyphenol-Gruppe, insbesondere Copolymere von Katecholaminen, wie Dopamin, und polyhydroxyphenolischen Biomolekülen, wie Tannin (Co-PDA-PTA-Polymer), in Verfahren zur Herstellung von keramischen Trennmembranen eingesetzt, worin diese einer thermischen Behandlung unterzogen und dabei auch höheren Temperaturen (> 100 °C) ausgesetzt werden. Durch diese thermische Behandlung, die erfindungsgemäß bei Temperaturen zwischen 25 und 500°C, bevorzugt bei Temperaturen ≥ 60°C und 500 °C in Luft durchgeführt wird, werden thermisch stabile Schichten der polymerisierten bzw. copolymerisierten Polymere und/oder Copolymere von Verbindungen mit mindestens einer Polyhydroxyphenol-Gruppe erhalten.

Dieser erfindungsgemäße thermische Behandlungsschritt wird bevorzugt bei Temperaturen > 25°C, bevorzugter ≥ 50°C, bevorzugter > 60°C, bevorzugter ≥ 100°C, noch bevorzugter ≥ 200 °C durchgeführt.

Die Obergrenze dieses thermischen Behandlungsschritts liegt in der Regel bei maximal 500 °C, bevorzugt maximal 450°C, bevorzugter maximal 400°C, noch bevorzugter bei maximal 350°C.

Geeignete Temperaturbereiche dieses erfindungsgemäßen thermischen Behandlungsschritts liegen in Bereichen zwischen 60 und 450 °C oder zwischen 100 und 450°C, bevorzugt zwischen 100 und 400 °C oder zwischen 150 und 400°C, bevorzugter zwischen 200 und 350°C, noch bevorzugter zwischen 150 und 250 °C, wobei in einem weiteren Aspekt auch ein Vorzugsbereich zwischen 250 und 300 °C gewählt werden kann. Bei Verwendung von Trägermaterialien in Form zylindrischer Röhren können beispielsweise Temperaturen um die 200 °C angewendet werden.

Membranen, die eine Schicht polymerisierter oder copolymerisierter Verbindungen mit mindestens einer Polyhydroxyphenol-Gruppe aufweisen, die einer solchen thermischen Behandlung unterworfen wurden, eignen sich in den erfindungsgemäßen Anwendungsgebieten als Trennmembran überraschend gut zur Abtrennung von Wasser, bspw. in Form von Wasserdampf, aus Lösungsmittelgemischen bzw. aus Wasser- und Dampfgemischen. Überraschenderweise und unerwartet wurde auch festgestellt, dass sie auch als Molekularsieb für die Abtrennung von He oder H₂ funktionieren.

Wird beispielsweise eine GO-Schicht keramischer Trennmembranen durch Reduktion in eine Graphen-Schicht umgewandelt, so sind dafür Temperaturen von über 500 °C erforderlich.

Bei thermischer Behandlung bei Temperaturen von mindestens 300 °C, bevorzugt zwischen 500 bis 1000°C in einer inerten oder reduktiven Atmosphäre karbonisieren die Polymere und/oder Copolymere der erfindungsgemäß eingesetzten Verbindungen mit mindestens einer Polyhydroxyphenol-Gruppe, z.B. das Co-PDA-PTA-Polymer, und bildet eine Schicht mit einer geschichteten Kohlenstoffstruktur aus. Ein solches Material wird als karbonisiertes Polymer und/oder Copolymer der Verbindungen mit mindestens einer Polyhydroxyphenol-Gruppe, beispielsweise als karbonisiertes Co-PDA-PTA-Polymer bezeichnet und weist vergleichbare Eigenschaften wie reduziertes Graphenoxid auf. Um eine solche Kohlenstoffmembran aus karbonisierten Polymeren und/oder Copolymeren von Verbindungen mit mindestens einer Polyhydroxyphenol-Gruppe zu erhalten, muss bei entsprechend hohen Temperaturen in einer inerten Atmosphäre gearbeitet werden, andernfalls besteht das Risiko, dass die KohlenstoffMembran verbrennt. Im Prinzip kann die inerte Atmosphäre neben einer H₂-Atmosphäre auch z.B. Stickstoff oder Vakuum sein. Führt man diesen Karbonisierungsschritt in einer reduzierenden Atmosphäre durch, kann eine Umwandlung der Polymere und/oder Copolymere der erfindungsgemäß eingesetzten Verbindungen mit mindestens einer Polyhydroxyphenol-Gruppe in reinen Kohlenstoff oder Stickstoff enthaltenden Kohlenstoff auch bei niedrigeren Temperaturen erreicht werden. Dies ist insbesondere relevant, wenn die Membran weitere Schichten aufweist, die hinsichtlich einer thermischen Behandlung bei sehr hohen Temperaturen limitiert sind. So kann sich beispielsweise die Struktur von mesoporösen Zwischenschichten aus Zirkoniumdioxid bei Temperaturen ab 800 °C anfangen zu verändern.

Die Erfinder der vorliegenden Erfindung haben überraschend gefunden, dass auch weitere Verbindungen aus der Gruppe von Biomolekülen mit ähnlicher Struktur zu Katecholaminen mit der Fähigkeit zur Polymerisierung bzw. Copolymerisierung für den Einsatz zur Herstellung keramischer Trennmembranen geeignet sind und durch die hohen Verfahrenstemperaturen bei der Herstellung karbonisieren (pyrolysieren) und eine Schicht mit herausragenden Hafteigenschaften ausbildet, ohne dabei die Trenneigenschaften der Membran mit deren Schichtaufbau negativ zu beeinflussen oder gar die Permeabilität für die zu trennenden Atome oder Moleküle zu verschlechtern oder gar zu verhindern, und darüber hinaus Trennschichten mit besonders guter Selektivität für die kleinsten Moleküle bereitstellen. Es war nicht vorhersehbar, dass eine in keramischen Trennmembranen eingesetzte Schicht von Polymeren und/oder Copolymeren von Verbindungen mit mindestens einer Polyhydroxyphenol-Gruppe eine karbonisierte Schicht bildet, welche mindestens die gleiche Gasdurchlässigkeit wie eine funktionale GO-/Graphen-Deckschicht aufweist und daher kein Hindernis für den Gastransport durch die Trennmembran darstellt und über die guten Selektions- und Trenneigenschaften verfügt, die mit den erfindungsgemäßen Membranen erzielt wurden.

Die Erfinder fanden außerdem überraschend, dass bei der Herstellung einer erfindungsgemäßen Membran mit einer Schicht von Polymeren und/oder Copolymeren von Verbindungen mit mindestens einer Polyhydroxyphenol-Gruppe unter Anwendung einer Temperatur zwischen 200 und 300 °C in Luftatmosphäre, beispielsweise bei 200 °C oder bei 250 °C in Luftatmosphäre, also unter Temperaturbedingungen, unter denen der Kohlenstoff nicht verbrennt, eine hydrophile Membran mit hoher Wasserselektivität und hoher Wasserdurchlässigkeit erhalten wird. Derart hergestellte Membranen mit thermisch stabilisierten karbonisierten Schichten zeigten auch eine gute He- und H₂-Selektivität und eine verbesserte Permeabilitätsrate für CO₂, so dass die erfindungsgemäßen Membranen, insbesondere solche mit karbonisierten Co-PDA-PTA-Polymer Schichten, als verbessertes Molekularsieb für z.B. die Trennung von He und H₂ sowie für die Trennung von He, H₂ und CO₂ von N₂ oder CH₄ eignen, aber überraschend auch zur Abtrennung von Wasser aus Wasser-/Dampfgemischen geeignet sind.

In einem Aspekt betrifft die Erfindung eine Membran für die Trennung von Gas-, Dampf- und Flüssigkeitsgemischen, welche eine oder mehrere poröse keramische Trägerschichten sowie mindestens eine Schicht auf Basis von Polymeren und/oder Copolymeren von Verbindungen mit mindestens einer Polyhydroxyphenol-Gruppe aufweist, wobei es sich um thermisch behandelte Schichten von Polymeren und/oder Copolymeren von Verbindungen mit mindestens einer Polyhydroxyphenol-Gruppe handelt, wobei die thermische Behandlung in der Regel in einem Temperaturbereich bis maximal 500°C (wie oben definiert) erfolgt. Solche Membranen sind besonders zur Abtrennung von Wasser/Wasserdampf geeignet.

In einem weiteren bevorzugten Aspekt betrifft die Erfindung eine Membran für die Trennung von Gas-, Dampf- und Flüssigkeitsgemischen, welche eine oder mehrere poröse keramische Trägerschichten sowie mindestens eine Schicht auf Basis karbonisierter Polymere und/oder Copolymere von Verbindungen mit mindestens einer Polyhydroxyphenol-Gruppe aufweist. Darin handelt es sich um Schichten karbonisierter polymerisierter bzw. copolymerisierter Verbindungen mit mindestens einer Polyhydroxyphenol-Gruppe bevorzugt um Verbindungen welche eine oder mehrere Polyhydroxyphenol-Gruppen wie oben beschrieben aufweisen, welche einer zusätzlichen Hitzebehandlung bei Temperaturen > 300 °C, bevorzugt bei Temperaturen > 500°C (wie oben definiert) unterworfen werden. Solche Membranen sind besonders zur selektiven Trennung kleinster Moleküle / Atome wie He oder H₂ geeignet und zeigen außerdem eine gute Permeabilität und Trennleistung für CO₂ von N₂ oder CH₄ und können somit als echte Molekularsiebe eingesetzt werden.

Damit betrifft ein weiterer Aspekt der Erfindung ein Verfahren zur Abtrennung von He und/oder H₂, oder von He, H₂ und/oder CO₂ oder von H₂O aus Gas-, Dampf- und Flüssigkeitsgemischen mittels einer Molekularsiebmembran wie hierin beschrieben.

In weiteren Aspekten betrifft die Erfindung eine mehrlagige poröse Membran, welche mindestens eine Schicht auf Basis thermisch stabilisierter (bevorzugt karbonisierter) Polymere und/oder Copolymere von Verbindungen mit mindestens einer Polyhydroxyphenol-Gruppe aufweist. Eine Wiederholung des Beschichtungsschritts kann z.B. durchgeführt werden, um eine möglichst gleichmäßige und vollständige Beschichtung ohne mögliche Löcher oder andere Defekte zu erhalten. Dadurch können in einem zweiten (und ggf. weiteren) Beschichtungsschritten mögliche Löcher oder Defekte in der zuvor aufgebrachten Schicht repariert und ggf. aufgefüllt werden. In der Regel sollten eine bis zwei Beschichtungsschritte ausreichend sein.

In einer bevorzugten Ausführungsform der erfindungsgemäßen Membran umfasst diese außerdem eine oder mehrere poröse Zwischenschichten. Diese Zwischenschicht(en) sind dann zwischen der porösen keramischen Trägerschicht und einer thermisch stabilisierten (bevorzugt karbonisierten) Schicht von Polymeren und/oder von Verbindungen mit mindestens einer Polyhydroxyphenol-Gruppe angeordnet. Liegen mehrere solcher Schichten thermisch stabilisierter (bevorzugt karbonisierter) Polymere und/oder Copolymere von Verbindungen mit mindestens einer Polyhydroxyphenol-Gruppe im Membranaufbau vor, so können die porösen keramischen Trägerschichten, porösen Zwischenschichten und die Schichten thermisch stabilisierter (bevorzugt karbonisierter) Polymere und/oder Copolymere von Verbindungen mit mindestens einer Polyhydroxyphenol-Gruppe in variabler Reihenfolge in alternierenden Schichten angeordnet werden.

Der hierin verwendete Begriff der "Membran" bezeichnet insbesondere mehrschichtige, poröse Membranen mit einer Porenstruktur, die je nach Anwendungsgebiet in der Lage ist, Wasser oder kleinere Gasmoleküle, wie beispielsweise He oder H₂ (oder sogar CO₂) durchzulassen und damit aus einer gasförmigen oder flüssigen Mischung von größeren Molekülen wie N₂ und CH₄ etc. abzutrennen.

Die erfindungsgemäßen Membranen umfassen eine oder mehrere poröse keramische Trägerschichten, wobei es sich bevorzugt um makroporöse Träger handelt. Als makroporöse Trägerschicht der erfindungsgemäßen mehrschichtigen Membranvorrichtung kann beispielsweise ein poröser α-Al₂O₃ Träger eingesetzt werden, welcher über übliche konventionelle keramische Pulvertechnologie-Methoden hergestellt werden kann. Ferner können aber auch die bereits bekannten Trägermaterialien, wie beispielsweise Titandioxid (TiO₂), Zirkoniumdioxid (ZrOz), mit Yttrium stabilisiertes Zirkoniumdioxid (YSZ), Siliziumoxid (SiO₂), Ceroxid (CeO₂), Magnesiumoxid (MgO), Yttriumoxid (Y₂O₃), Gadoliniumoxid (Gd₂O₃), Siliziumkarbid (SiC), Karbon oder metallische Komponenten als Träger eingesetzt werden. Weitere geeignete keramische Materialien für die Trägerstruktur sind beispielsweise Mullit, Cordierit, Zeolith, Bariumtitanoxid (BaTiO₃), Siliziumnitrid (Si₃N₄), Siliziumoxycarbid (SiOC), Siliziumcarbonitrid (SiCN), Aluminiumnitrid (AIN) oder Mischungen aus den vorgenannten Materialien.

Der makroporöse Träger kann monolagig bzw. mehrlagig gradiert sein. Sind mehrere makroporöse Schichten vorgesehen, so weist die dem Träger entfernter angeordnete Schicht regelmäßig eine kleinere mittlere Porengröße auf, als die dem Träger näher angeordnete Zwischenschicht. Als Materialien für die makroporösen Schichten können die bereits erwähnten Trägermaterialien eingesetzt werden. Die makroporösen Schichten können mit herkömmlichen Methoden, wie beispielsweise Suspensionsbeschichtungs-Methoden oder Rakeln auf dem Träger aufgebracht werden.

Der Träger selbst kann dabei in allen bekannten Geometrien, also als flache Schicht, als zylindrisches Rohr, als Hohlfaser oder auch als Kapillare vorliegen. Für den Fall, dass der Träger die Form eines zylindrischen Rohrs, einer Hohlfaser oder einer Kapillare aufweist, können die übrigen Schichten und die Deckschicht sowohl auf der Innenseite als auch auf der Außenseite angeordnet sein. Ferner kann der Träger selbst auch als ein Vielkanalelement ausgestaltet sein, beispielsweise als Mehrkanal-Platte oder Mehrkanal-Rohr oder in einer Wabenstruktur. Träger in Form von zylindrischen Röhren sind in Hinblick auf industrielle Anwendungen und large-scale Ausführungsformen bevorzugt.

In einem Aspekt umfasst die Erfindung eine Membran für die Trennung von Gas-, Dampf- und Flüssigkeitsgemischen wie hierin beschrieben, worin die porösen keramischen Trägerschichten makroporöse Schichten mit Poren mit einem Porendurchmesser > 50 nm sind.

In einem weiteren Aspekt umfasst die Erfindung eine Membran für die Trennung von Gas-, Dampf- und Flüssigkeitsgemischen wie hierin beschrieben, worin poröse keramische Trägerschichten ausgewählt werden aus der oben genannten Gruppe.

In einem weiteren Aspekt umfasst die Erfindung eine Membran für die Trennung von Gas-, Dampf- und Flüssigkeitsgemischen wie hierin beschrieben, worin poröse keramische Trägerschichten aus der Gruppe makroporöser keramischer Trägerschichten mit Poren mit einem Porendurchmesser > 50 nm ausgewählt werden.

In einem weiteren Aspekt umfasst die Erfindung eine Membran für die Trennung von Gas-, Dampf- und Flüssigkeitsgemischen wie hierin beschrieben, worin poröse keramische Trägerschichten ausgewählt werden aus der Gruppe makroporöser keramischer Trägerschichten umfassend α-Al₂O₃, TiOz, ZrOz, YSZ, SiOz, CeOz, MgO, Y₂O₃, Gd₂O₃, Mullit, Cordierit, Zeolith, BaTiO₃, metallische Komponenten, Karbon, SiC, Si₃N₄, SiOC, SiCN, AIN oder Mischungen der vorgenannten Materialien.

Die erfindungsgemäßen Membranen können außerdem eine oder mehrere poröse Zwischenschichten aufweisen, wobei es sich bevorzugt um mesoporöse Schichten handelt.

Sind mesoporöse Zwischenschichten vorgesehen, so weisen diese aus Richtung der Trägerschicht betrachtet einerseits eine geringere mittlere Porengröße auf und andererseits eine geringere Oberflächenrauigkeit. Die mittlere Porengröße der auf der Trägerschicht angeordneten mesoporösen Zwischenschicht liegt regelmäßig zwischen 2 nm und 50 nm.

Sind mehrere mesoporöse Zwischenschichten vorgesehen, so weist die der Trägerschicht entfernter angeordnete mesoporöse Zwischenschicht regelmäßig eine kleinere mittlere Porengröße und Oberflächenrauigkeit auf, als die dem Träger näher angeordnete Zwischenschicht. Vorteilhaft weist bei mehreren mesoporösen Zwischenschichten wenigstens eine einen mittleren Porendurchmesser < 5 nm auf, vorteilhaft diejenige, die für den Kontakt mit der darauffolgenden Trennschicht, z.B. der abschließenden Deckschicht, vorgesehen ist.

Die vorgenannten mesoporösen Zwischenschichten können alternativ aber auch nur als eine gradierte Schicht ausgestaltet sein.

Geeignete Materialien für die Zwischenschicht(en) sind neben γ-Al₂O₃, Titandioxid (TiO₂), Zirkoniumdioxid (ZrOz), mit Yttrium stabilisiertes Zirkoniumdioxid (YSZ), Siliziumoxid (SiO₂), Ceroxid (CeO₂), Magnesiumoxid (MgO), Yttriumoxid (Y₂O₃), Gadoliniumoxid (Gd₂O₃), Zinkoxid (ZnO), Zinnoxid (SnOz), Mullit, Cordierit, Zeolith, Metal-Organic Framework materials (MOF), Ton, Bariumtitanoxid (BaTiO₃), Karbon, Siliziumkarbid (SiC), Siliziumnitrid (Si₃N₄), Siliziumoxycarbid (SiOC), Siliziumcarbonitrid (SiCN), Aluminiumnitrid (AIN) oder Mischungen aus den vorgenannten Materialien.

Mesoporöse Zwischenschichten können ebenfalls mit herkömmlichen Methoden, wie beispielsweise der Beschichtung mit einer kolloidalen Dispersion, einem Sol-Gel-Beschichtungsprozess oder einer Hydrothermalsynthese, auf die Trägerschicht aufgebracht werden. Dazu werden vorteilhaft Teilchen mit mittleren Teilchendurchmessern von 5 bis 200 nm zusammen mit typischen Bindern, z. B. Polyvinylalkohol, Polyethylenglykol oder Celluloseverbindungen in Wasser gelöst eingesetzt. Aufgrund der notwendigen kleinen Teilchengrößen für das Ausgangsmaterial sind metallische Materialien zur Herstellung von mesoporösen Schichten weniger geeignet. Nach dem Beschichtungsvorgang erfolgt eine Trocknung bei Temperaturen bis 100 °C. Nach dem Trocknungsprozess erfolgt ein thermischer Behandlungsschritt bei Temperaturen bis oberhalb von 300 °C, um die Schicht zu kalzinieren.

In einer vorteilhaften Ausgestaltung der Erfindung wird eine mesoporöse Schicht umfassend mit 8 mol-% Yttriumoxid stabilisiertes Zirkoniumdioxid (8YSZ) mittels Dip-Coating-Verfahren (Tauchbeschichtung) auf einem makroporösen Träger aufgebracht. Dabei werden solche Zwischenschichten bei Verwendung von Trägern in Form von zylindrischen Röhren bevorzugt auf der Innenseite der röhrenförmigen Träger aufgebracht, beispielsweise mittels Tauchverfahren. Es hat sich gezeigt, dass eine solche Schicht Temperaturen bis zu 1000 °C unbeschadet übersteht. Temperaturen im Bereich 500 °C bis 900 °C werden benötigt, um in einem Aspekt der Erfindung in einem späteren Verfahrensschritt eine teilweise oder vollständige Reduktion von Graphenoxid durch eine Hochtemperaturbehandlung zu bewirken. Jedenfalls sind solche hohen Temperaturen von 500 °C bis 1000 °C auch erforderlich, um die Karbonisierung der erfindungsgemäßen Schicht karbonisierter Polymere und/oder Copolymere von Verbindungen mit mindestens einer Polyhydroxyphenol-Gruppe zu erhalten.

In einem weiteren Aspekt weist eine erfindungsgemäße Membran wenigstens eine makroporöse Trägerschicht mit Poren im Bereich > 50 nm sowie wenigstens eine mesoporöse Zwischenschicht mit Poren im Bereich 2 nm bis < 50 nm bei einer Schichtdicke zwischen 0,1 und 10 µm auf.

In einem weiteren Aspekt umfasst die Erfindung eine Membran für die Trennung von Gas-, Dampf- und Flüssigkeitsgemischen wie hierin beschrieben, welche eine oder mehrere poröse Zwischenschichten umfasst, welche mesoporöse Schichten mit Poren mit einem mittleren Porendurchmesser von 2 nm bis 10 nm sind.

In einem weiteren Aspekt umfasst die Erfindung eine Membran für die Trennung von Gas-, Dampf- und Flüssigkeitsgemischen wie hierin beschrieben, worin poröse Zwischenschichten ausgewählt werden aus der oben genannten Gruppe, insbesondere bevorzugt sind keramische Zwischenschichten.

In einem weiteren Aspekt umfasst die Erfindung eine Membran für die Trennung von Gas-, Dampf- und Flüssigkeitsgemischen wie hierin beschrieben, worin poröse Zwischenschichten aus der Gruppe mesoporöser keramischer Zwischenschichten mit Poren mit einem mittleren Porendurchmesser von 2 nm bis 5 nm ausgewählt werden.

In einem weiteren Aspekt umfasst die Erfindung eine Membran für die Trennung von Gas-, Dampf- und Flüssigkeitsgemischen wie hierin beschrieben, worin poröse Zwischenschichten ausgewählt werden aus der Gruppe mesoporöser keramischer Schichten umfassend γ-Al₂O₃, TiO₂, ZrOz, YSZ, SiO₂, CeO₂, MgO, Y₂O₃, Gd₂O₃, ZnO, SnO₂, Mullit, Cordierit, Zeolith, Metal-Organic Framework Materialien (MOF), Ton, BaTiO₃, Karbon, SiC, Si₃N₄, SiOC, SiCN, AIN oder Mischungen der vorgenannten Materialien.

Die Erfinder der vorliegenden Erfindung haben überraschend gefunden, dass die hierin beschriebenen Membranen, welche eine Schicht thermisch stabilisierter (bevorzugt karbonisierter) Polymere und/oder Copolymere von Verbindungen mit mindestens einer Polyhydroxyphenol-Gruppe aufweist, die Bereitstellung einer stabilen Trennmembran ermöglich, welche zur Abtrennung von Wasser aus Wasser-/Dampfgemischen und die Anwendung als He- und H₂-selektive Membran sowie als CO₂-selektive Membran ermöglicht. Überraschend wurde gefunden, dass die erfindungsgemäßen Membranen eine erhöhte CO₂-Permeation aufweisen, auch bei erhöhten Temperaturen (oberhalb von Raumtemperatur), und in der Lage sind zwischen CO₂ und größeren Molekülen wie N₂ und CH₄ selektiv zu trennen.

Da üblicherweise die Trennung von CO₂ von größeren Gasen bei Verwendung von porösen Keramikmembranen auf einem Adsorptionsmechanismus basiert und da die CO₂-Adsorption mit steigender Temperatur stark abnimmt, ist die CO₂-Trennung bisher mit bekannten Membranen zur H₂-Trennung nur bei Raumtemperatur möglich.

Somit betrifft ein weiterer Aspekt der Erfindung ein Verfahren zur Abtrennung von CO₂ aus Gas-, Dampf- und Flüssigkeitsgemischen bei Temperaturen oberhalb von Raumtemperatur mittels einer Molekularsiebmembran wie hierin beschrieben.

Zur Trennung von He, H₂ und CO₂ sind insbesondere erfindungsgemäße Membranen geeignet, die zusätzlich zu den Schichten karbonisierter Polymere und/oder Copolymere von Verbindungen mit mindestens einer Polyhydroxyphenol-Gruppe mindestens eine Schicht (5) umfassend Graphenoxid, teilweise reduziertes Graphenoxid oder Graphen aufweisen. Somit betrifft ein weiterer Aspekt der Erfindung ein Verfahren zur Abtrennung von CO₂ aus Gas-, Dampf- und Flüssigkeitsgemischen bei Temperaturen oberhalb von Raumtemperatur mittels einer Molekularsiebmembran wie hierin beschrieben welche mindestens eine Schicht (5) umfassend Graphenoxid, teilweise reduziertes Graphenoxid oder Graphen aufweist.

Grundsätzlich kann die Aufbringung einer solchen Schicht thermisch stabilisierter (bevorzugt karbonisierter) Polymere und/oder Copolymere von Verbindungen mit mindestens einer Polyhydroxyphenol-Gruppe unter Anwendung der gleichen Beschichtungsverfahren erreicht werden wie unten beschrieben. Dabei wird mit dem gewählten Auftragungsverfahren zunächst eine Schicht der Polymere und/oder Copolymere von Verbindungen mit mindestens einer Polyhydroxyphenol-Gruppe (z.B. eine PTA Schicht oder eine Co-PDA-PTA-Polymer Schicht), auf den darunterliegenden Schichten erzeugt und diese anschließend in einer thermischen Behandlung bei Temperaturen zwischen 60 und 450°C, bevorzugt zwischen 100 und 450 °C (wie oben definiert) in Luft in eine robuste und thermisch stabile Schicht von Polymeren und/oder Copolymeren von Verbindungen mit mindestens einer Polyhydroxyphenol-Gruppe überführt. Für die Herstellung der erfindungsgemäßen Membranen mit karbonisierten Polymeren und/oder Copolymeren von Verbindungen mit mindestens einer Polyhydroxyphenol-Gruppe erfolgt anschließend eine Karbonisierung (Pyrolisierung) der Schicht der Polymere und/oder Copolymere von Verbindungen mit mindestens einer Polyhydroxyphenol-Gruppe in einer zusätzlichen Hitzebehandlung bei Temperaturen > 300 °C, bevorzugt > 500 °C. Die Verbindungen mit mindestens einer Polyhydroxyphenol-Gruppe können direkt als wässrige Lösung auf die darunterliegende Schicht aufgebracht werden und die Polymerisierung bzw. Copolymerisierung erfolgt dann in situ auf der Oberfläche des darunterliegenden Trägermaterials. Es ist auch möglich, zuerst eine Dispersion / Suspension von polymerisierten bzw. copolymerisierten Partikeln der Verbindungen mit mindestens einer Polyhydroxyphenol-Gruppe (z.B. PTA-Partikel oder Co-PDA-PTA-Polymer Partikel) in Wasser zu synthetisieren und diese auf die Oberfläche des darunter liegenden Trägermaterials aufzubringen.

Besonders vorteilhaft ist, dass die erfindungsgemäß eingesetzten Verbindungen mit mindestens einer Polyhydroxyphenol-Gruppe in Wasser löslich sind. Dadurch können hervorragend klebende Polymer- bzw. Copolymerschichten erhalten werden, die den Einsatz von organischen Lösungsmitteln oder die Zugabe von Säuren oder Basen zum Auflösen der Monomerbausteine nicht erfordert. Wasser ist als Lösungsmittel in der industriellen Anwendung aufgrund seiner Verfügbarkeit und einfachen Handhabbarkeit stets ein bevorzugtes Lösungsmittel.

Eine zusätzliche GO-/Graphen-Deckschicht, wie sie die Membranen aus dem Stand der Technik aufweisen, ist für die neuartigen Membranen der vorliegenden Erfindung nicht erforderlich und stellt eine optionale Variante dar.

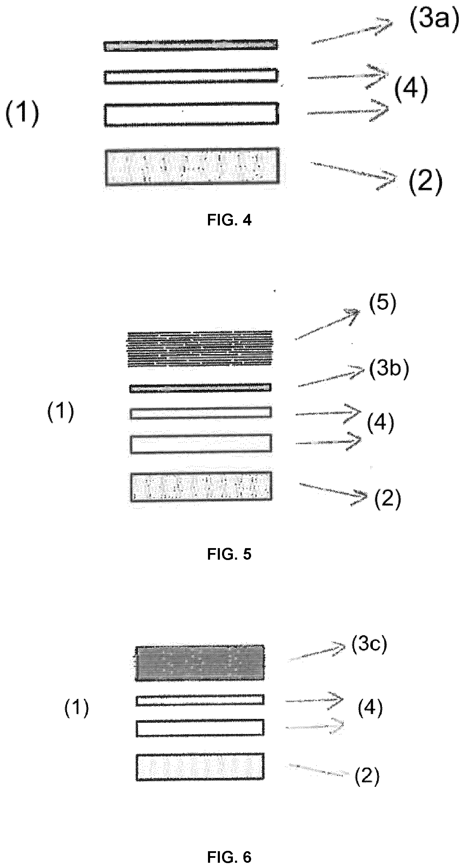

Die vorliegende Erfindung stellt somit neuartige Membranen für die Trennung von Gas-, Dampf- und Flüssigkeitsgemischen bereit, welche eine Trennschicht enthaltend thermisch stabilisierte (bevorzugt karbonisierte) Polymere und/oder Copolymere von Verbindungen mit mindestens einer Polyhydroxyphenol-Gruppe aufweist und die eine selektive Trennung kleinster Moleküle / Atome wie He, H₂, CO₂ und Wasser ermöglicht. Dabei ist die Schicht die die thermisch stabilisierten (bevorzugt karbonisierten) Polymere und/oder Copolymere von Verbindungen mit mindestens einer Polyhydroxyphenol-Gruppe enthält in der Regel als eine äußere Deckschicht vorgesehen. Fig. 4 zeigt eine schematische Darstellung solcher erfindungsgemäßer Ausführungsformen.

Aufgrund der oben beschriebenen guten Hafteigenschaften der thermisch stabilisierten (bevorzugt karbonisierten) Polymere und/oder Copolymere von Verbindungen mit mindestens einer Polyhydroxyphenol-Gruppe eignen sich diese außerdem zur Verbesserung der aus dem Stand der Technik bekannten Membranen, welche sich durch eine Schicht von Graphenoxid, teilweise reduziertem Graphenoxid oder Graphen auszeichnen. Ist eine solche Schicht von Graphenoxid, teilweise reduziertem Graphenoxid oder Graphen in der Membran vorgesehen, so handelt es sich dabei bevorzugt um eine Schicht umfassend Graphenoxid, teilweise reduziertem Graphenoxid oder Graphen. Eine solche Schicht von Graphenoxid, teilweise reduziertem Graphenoxid oder Graphen bildet dann bevorzugt eine Deckschicht der erfindungsgemäßen Membranen, welche durch eine als Klebeschicht vorgesehene Schicht von thermisch stabilisierten (bevorzugt karbonisierten) Polymeren und/oder Copolymeren von Verbindungen mit mindestens einer Polyhydroxyphenol-Gruppe fest mit der porösen Träger- und/oder Zwischenschicht (sofern vorgesehen) verbunden wird.

Im Rahmen dieser Erfindung wird unter einer Schicht von Graphenoxid, teilweise reduziertem Graphenoxid oder Graphen eine Schichtung von aufeinander angeordneten Graphen und/oder Graphenoxid-Monolagen verstanden. Die Anzahl der Monolagen variiert dabei im Bereich zwischen ca. 5 und 1000. Unter der Voraussetzung, dass 1000 Monolagen Graphen eine Schichtdicke von ca. 600 nm und 1000 Monolagen Graphenoxid eine Schichtdicke von ca. 1 bis 2 µm aufweisen, liegt die Schichtdicke einer solchen Schicht somit typischerweise bei unter 2 µm, vorteilhaft sogar bei unter 300 nm.

Die Schichtdicke dieser Schicht beträgt bevorzugt weniger als 2 µm, bevorzugt zwischen 5 nm und 1 µm, vorteilhaft zwischen 5 nm und 300 nm. Die Durchlässigkeit einer solchen Deckschicht wird dabei im Wesentlichen durch den Zwischenschichtabstand der Graphen- bzw. Graphenoxidlagen der Deckschicht bestimmt. Die einzelnen Graphenoxidlagen weisen regelmäßig einen Zwischenschichtabstand von 0,6 nm bis 1,3 nm je nach Feuchtigkeit auf. Graphenoxid selbst ist hydrophil. Eine solche funktionale Schicht ist daher insbesondere für Trennaufgaben geeignet, bei denen Wasser in der Flüssig oder Gasphase zu trennen ist von anderen größeren Molekülen. Eine solche funktionale GO- Schicht ist auch geeignet für die klassische Gastrennung. Der Vorteil einer solchen Schicht ist, dass der Abstand zwischen den einzelnen Lagen vorteilhaft durch Anpassen der Feuchtigkeit eingestellt werden kann. Es hat sich gezeigt, dass die Membrane unter trockenen Bedingungen selektiv ist für He und H₂. Außerdem hat sich gezeigt, dass die Membranen eine verbesserte Permeation für CO₂ aufweisen und somit auch für CO₂ selektiv sind. Größere Moleküle werden zurückgehalten. Unter feuchten Bedingungen werden Wassermoleküle zwischen den Graphenoxidlagen interkaliert. Dadurch ist die Membrane fähig, selektiv wasserlösliche Gasmoleküle von weniger löslichen Molekülen zu trennen. Das wasserlösliche CO₂ kann dabei z. B. durch die Membrane dringen, während weniger lösliche Moleküle wie z. B. N₂ mehr zurückgehalten werden.

Zur Aufbringung einer solchen mikroporösen Deckschicht auf die Membran wird diese in Form einer kolloidalen Dispersion, bestehend aus monolagigen Graphenoxidteilchen und Wasser, auf die auf der mesoporösen Zwischenschicht aufgebrachte Schicht von Polymeren und/oder Copolymeren von Verbindungen mit mindestens einer Polyhydroxyphenol-Gruppe aufgebracht. Als Aufbringungsmethoden kommen dabei grundsätzlich die bekannten Methoden, wie z.B. Tauchbeschichtung (Eintauchen oder Dip-Coating), Rotationsbeschichtung (Spin-Coating), Sprühen, Fluten, Drop-Coating, Walzenbeschichtung (Roller-Coating), Tintenstrahldruck oder auch eine Vakuumfiltration, in Betracht.

Abgesehen von den wässrigen Dispersionen können auch Dispersionen bestehend aus Graphenoxidteilchen und polaren organischen Lösungsmitteln, wie z. B. Alkohole, Ether, cyclischen Ether (THF, DMF), N-Methyl-2-pyrrolidon (NMP) eingesetzt werden, wässrige Lösungen sind jedoch bevorzugt.

Nachfolgend kann ein Trocknungsschritt bei einer Temperatur von ca. 25 °C erfolgen. Die getrockneten Schichten werden anschließend unter Luft einer Temperaturbehandlung, bei einer Temperatur zwischen 60 und 450 °C, bevorzugt zwischen 100 und 450°C (wie oben definiert) unterworfen, wobei eine robuste und thermisch stabile Deckschicht erhalten wird. Wie oben beschrieben neigt die GO-Deckschicht beim Trocknen zum Reißen, Abblättern oder Ablösen, was durch die erfindungsgemäß vorgesehene Schicht von (ggf. karbonisierten) Polymeren und/oder Copolymeren von Verbindungen mit mindestens einer Polyhydroxyphenol-Gruppe, welche als Klebeschicht zwischen einer porösen Träger- oder Zwischenschicht und der Deckschicht von Graphenoxid, teilweise reduziertem Graphenoxid oder Graphen angeordnet wird, vermieden.

Somit betrifft eine mögliche Ausführungsform der Erfindung eine Membran für die Trennung von Gas-, Dampf- und Flüssigkeitsgemischen, welche eine oder mehrere Schichten Graphenoxid, teilweise reduziertes Graphenoxid oder Graphen aufweist. In solchen Ausführungsformen hat sich die erfindungsgemäße Schicht thermisch stabilisierter (bevorzugt karbonisierter) Polymere und/oder Copolymere von Verbindungen mit mindestens einer Polyhydroxyphenol-Gruppe überraschend als eine besonders geeignete Klebeschicht erwiesen, welche für eine feste und stabile Verbindung der porösen Trägerschicht oder einer gegebenenfalls vorgesehenen porösen Zwischenschicht mit der Schicht umfassend Graphenoxid, teilweise reduziertes Graphenoxid oder Graphen sorgt. In solchen Ausführungsformen ist die Schicht umfassend Graphenoxid, teilweise reduziertes Graphenoxid oder Graphen bevorzugt als äußere Deckschicht vorgesehen. Fig. 5 zeigt eine schematische Darstellung einer solchen erfindungsgemäßen Ausführungsform.

Wie von den Erfindern in Experimenten gezeigt werden konnte, ermöglicht das Aufbringen einer Schicht von Polymeren und/oder Copolymeren von Verbindungen mit mindestens einer Polyhydroxyphenol-Gruppe auf der Trägerschicht oder einer gegebenenfalls vorgesehenen oberen (mesoporösen) Zwischenschicht vor dem Auftragen einer GO- oder Graphen-Deckschicht, dass die GO-/Graphen-Deckschicht den bei industriellen Trennprozessen herrschenden typischen Korrosions- und Druckbedingungen besser standhält und die Gefahr des Abblätterns der Deckschicht unter solchen Bedingungen deutlich verringert oder gar gänzlich verhindert wird. Die Schicht der Polymere und/oder Copolymere von Verbindungen mit mindestens einer Polyhydroxyphenol-Gruppe bildet durch die Hitzebehandlung im Beschichtungsverfahren eine starke chemische Bindung mit den darunterliegenden porösen Schichten auf der einen Seite und der darüber aufgebrachten GO-/Graphen-Deckschicht auf der anderen Seite aus und bildet somit eine Art Verbindung oder Brücke zwischen diesen, ohne die Permeabilität oder Gasdiffusion zu beeinträchtigen.

Eine weitere Ausführungsform der Erfindung betrifft somit eine Membran für die Trennung von Gas-, Dampf- und Flüssigkeitsgemischen wie hierin beschrieben, welche eine oder mehrere Schichten umfasst, welche Graphenoxid, teilweise reduziertes Graphenoxid oder Graphen aufweisen.

In solchen Ausführungsformen können die Schichten, umfassend Graphenoxid, teilweise reduziertes Graphenoxid oder Graphen, monolagig oder mehrlagig sind.

Als keramische Trennmembranen kommen insbesondere und in einem bevorzugten Aspekt der Erfindung solche in Frage wie in WO2016/177355 im Detail beschrieben, welche dann mit den erfindungsgemäßen Schichten thermisch stabilisierter (bevorzugt karbonisierter) Polymere und/oder Copolymere von Verbindungen mit mindestens einer Polyhydroxyphenol-Gruppe modifiziert bzw. verbessert werden. Die in WO2016/177355 beschriebenen Membranen und die Verfahren zu deren Herstellung sind somit in Hinblick darauf vom Umfang der vorliegenden Erfindung vollumfänglich umfasst. Wie oben erwähnt sind Träger in Form zylindrischer Röhren bevorzugt.

Weitere Ausführungsformen der erfindungsgemäßen Membranen umfassen solche mit folgenden Ausgestaltungen:
Membran für die Trennung von Gas-, Dampf- und Flüssigkeitsgemischen wie hierin beschrieben, umfassend wenigstens zwei poröse Zwischenschichten, bei denen in Richtung der die (ggf. karbonisierten) Polymere und/oder Copolymere von Verbindungen mit mindestens einer Polyhydroxyphenol-Gruppe enthaltenden Schicht sowohl die Teilchengröße, die Rauheit als auch die Porengröße abnimmt.

Membran für die Trennung von Gas-, Dampf- und Flüssigkeitsgemischen wie hierin beschrieben, umfassend wenigstens zwei poröse Zwischenschichten, von denen eine erste poröse Zwischenschicht in Kontakt mit einer porösen Trägerschicht und eine zweite poröse Zwischenschicht in Kontakt mit der die thermisch stabilisierten (bevorzugt karbonisierten) Schicht enthaltend Polymere und/oder Copolymere von Verbindungen mit mindestens einer Polyhydroxyphenol-Gruppe steht, und wobei wenigstens eine Zwischenschicht Poren mit einem mittleren Porendurchmesser kleiner als 10 nm aufweist.

Membran für die Trennung von Gas-, Dampf- und Flüssigkeitsgemischen wie hierin beschrieben, worin die erste poröse Zwischenschicht eine Schichtdicke zwischen 1 µm und 20 µm und/oder worin die zweite poröse Zwischenschicht eine Schichtdicke zwischen 0,1 µm und 2 µm aufweist.

Membran für die Trennung von Gas-, Dampf- und Flüssigkeitsgemischen wie hierin beschrieben, welche eine Schicht, umfassend Graphenoxid, teilweise reduziertes Graphenoxid oder Graphen, aufweist und wobei diese Schicht eine Schichtdicke zwischen 3 nm und 2 µm, bevorzugt zwischen 5 nm und 300 nm, bevorzugter zwischen 5 nm und 20 nm aufweist.

Membran für die Trennung von Gas-, Dampf- und Flüssigkeitsgemischen wie hierin beschrieben, umfassend eine mehrlagige Schicht welche zwischen 5 und 1000 Lagen an Graphenoxid, teilweise reduziertem Graphenoxid oder Graphen aufweist.

Membran für die Trennung von Gas-, Dampf- und Flüssigkeitsgemischen wie hierin beschrieben, worin die die thermisch stabilisierten (bevorzugt karbonisierten) Polymere und/oder Copolymere von Verbindungen mit mindestens einer Polyhydroxyphenol-Gruppe enthaltende Schicht eine Schichtdicke zwischen 3 und 1000 nm, bevorzugt zwischen 5 und 500 nm, bevorzugter zwischen 10 und 300 nm, noch bevorzugter zwischen 25 und 100 nm aufweist. Es ist außerdem möglich, dass die die thermisch stabilisierten (bevorzugt karbonisierten) Polymere und/oder Copolymere von Verbindungen mit mindestens einer Polyhydroxyphenol-Gruppe enthaltende Schicht eine Schichtdicke zwischen 25 nm und 500 nm, bevorzugt zwischen 25 nm und 300 nm, bevorzugter zwischen 25 nm und 200 nm, noch bevorzugter zwischen 25 nm und 100 nm aufweist. Die geeignete Schichtdicke kann mit der gewählten Form der zu beschichtenden Trägermaterialien variieren. Um rauere Oberflächen, z.B. von tubulären Substraten möglichst defektfrei und homogen zu beschichten, sind Schichtdicken > 20 nm, bevorzugter ≥ 25 nm, noch bevorzugter ≥ 50 beispielsweise um die 80 nm bevorzugt. Die geeignete Schichtdicke kann außerdem jedenfalls mit der Oberflächenbeschaffenheit des zu beschichtenden Substrats variieren und entsprechend gewählt werden.

Die Schichtdicke der die Polymere und/oder Copolymere von Verbindungen mit mindestens einer Polyhydroxyphenol-Gruppe enthaltenden Schicht hat insbesondere auch einen Einfluss auf die Gastrenn-/ bzw. Siebeigenschaften der Membran. Um ausreichend homogene und stabile Schichten mit möglichst vollständiger Abdeckung der darunterliegenden Trägerschichten für eine gleichmäßige und zuverlässige Permeation und Trennwirkung zu erhalten, weisen die Schichten karbonisierter Polymere und/oder Copolymere von Verbindungen mit mindestens einer Polyhydroxyphenol-Gruppe (3, 3a, 3b, 3c) der erfindungsgemäßen Membranen bevorzugt eine Schichtdicke > 20 nm, bevorzugter ≥ 25 nm, noch bevorzugter ≥ 50 nm auf. Ab einer gewissen Dicke kann sich dies nachteilig auf die Permeationsleistung auswirken, da der Durchtritt der zu trennenden Moleküle bei zu hoher Schichtdicke beeinträchtigt werden kann. Daher weisen die Schichten karbonisierter Polymere und/oder Copolymere von Verbindungen mit mindestens einer Polyhydroxyphenol-Gruppe (3, 3a, 3b, 3c) der erfindungsgemäßen Membranen bevorzugt eine Schichtdicke < 1000 nm, bevorzugt ≤ 500 nm, noch bevorzugter ≤ 300 nm auf. Dabei kann die minimale und/oder maximale Schichtdicke je nach eingesetzten Trennschichtmaterialien und der gewünschten Anwendung bzw. Trennleistung variieren.

Die Erfindung umfass außerdem eine Membran für die Trennung von Gas-, Dampf- und Flüssigkeitsgemischen wie hierin beschrieben, worin die Schicht, welche Graphenoxid, teilweise reduziertes Graphenoxid oder Graphen aufweist, als äußere Deckschicht der Membran angeordnet ist

Grundsätzlich kann in solchen mehrschichtigen Membranen das Aufbringen der verschiedenen Schichten mittels Eintauchen, Dip-Coating, Spin-Coating, Sprühen, Roller-Coating, Tintenstrahldruck oder auch Vakuumfiltration und anderen bekannten Beschichtungsverfahren erfolgen. Dabei können alle vorgesehenen Schichten mittels des gleichen Verfahrens aus den vorgenannten aufgebracht werden oder die einzelnen Schichten können jeweils mit unterschiedlichen aus den vorgenannten Verfahren aufgebracht werden.

In einer weiteren möglichen Ausführungsform der Erfindung kann eine GO-/Graphen-Deckschicht in Form einer Art gemischten Matrix aus einer Mischung der thermisch stabilisierten bzw. karbonisierten Polymere und/oder Copolymere von Verbindungen mit mindestens einer Polyhydroxyphenol-Gruppe und GO-/Graphen. Dazu werden vor der Polymerisierung bzw. Copolymerisierung der Ausgangslösung der Polymere und/oder Copolymere von Verbindungen mit mindestens einer Polyhydroxyphenol-Gruppe das Graphen oder Graphenoxid, zugegeben und diese Mischung dann auf die Oberfläche der darunterliegenden Schicht mit einem der hierin genannten Beschichtungsverfahren aufgebracht, so dass das Graphen / Graphenoxid während der Polymerisierung bzw. Copolymerisierung in die Schicht der polymerisierten bzw. copolymerisierten Verbindungen mit mindestens einer Polyhydroxyphenol-Gruppe integriert werden und mit dieser eine Art Verbundschicht bilden. Anschließend wird diese Verbund-Schicht in der oben beschriebenen Weise thermisch behandelt und bevorzugt karbonisiert und/oder ggf. reduziert, wobei die Bildung der robusten und stabilen Schicht der thermisch stabilisierten (bevorzugt karbonisierten) Polymere und/oder Copolymere von Verbindungen mit mindestens einer Polyhydroxyphenol-Gruppe erfolgt.

Somit betrifft eine weitere Ausführungsform der Erfindung eine Membran für die Trennung von Gas-, Dampf- und Flüssigkeitsgemischen wie hierin beschrieben, worin die thermisch stabilisierten (bevorzugt karbonisierten) Polymere und/oder Copolymere von Verbindungen mit mindestens einer Polyhydroxyphenol-Gruppe in Form einer gemischten Matrix mit Graphenoxid, teilweise reduziertem Graphenoxid oder Graphen vorliegen, welche bevorzugt als äußere Deckschicht der Membran ausbildet wird. Fig. 6 zeigt eine schematische Darstellung einer solchen erfindungsgemäßen Ausführungsform.

Die erfindungsgemäßen Membranen für die Trennung von Gas-, Dampf- und Flüssigkeitsgemischen wie hierin beschrieben sind grundsätzlich erhältlich durch Herstellung einer mehrlagigen Anordnung einer oder mehrerer (gleicher oder unterschiedlicher) der hierin beschriebenen vorgesehenen Schichten sowie mindestens einer Schicht von Polymeren und/oder Copolymeren von Verbindungen mit mindestens einer Polyhydroxyphenol-Gruppe und Erhitzen der mehrlagigen schichtförmigen Anordnung auf eine Temperatur > 50 °C, bevorzugt ≥ 60 °C, bevorzugter zwischen 60 und 450°C (wie oben beschrieben) in Luft unter Erhalt einer thermisch stabilen Schicht von Polymeren und/oder Copolymeren von Verbindungen mit mindestens einer Polyhydroxyphenol-Gruppe, und ggf. (bevorzugt) Durchführung einer weiteren Hitzebehandlung bei Temperaturen > 250 °C, bevorzugt > 300 °C, bevorzugter von mindestens 500 °C, vorzugsweise bei Temperaturen zwischen 500 und 1000 °C, bevorzugter bei Temperaturen zwischen 500 und 750 °C, und Karbonisierung der Polymere und/oder Copolymere der Verbindungen mit mindestens einer Polyhydroxyphenol-Gruppe unter Erhalt einer Schicht karbonisierter Polymere und/oder Copolymere von Verbindungen mit mindestens einer Polyhydroxyphenol-Gruppe, wobei die Karbonisierung ggf. unter reduzierenden Bedingungen (wie oben beschrieben) erfolgen kann.

Erfindungsgemäß wird die Karbonisierung der Polymere und/oder Copolymere der Verbindungen mit mindestens einer Polyhydroxyphenol-Gruppe bevorzugt in einer inerten und/oder reduktiven Atmosphäre durchgeführt.

Ein weiterer Aspekt der Erfindung betrifft ein Verfahren zur Herstellung der erfindungsgemäßen Membranen wie hierin beschrieben, umfassend die Schritte
(a) Bereitstellung oder Herstellung mindestens einer porösen keramischen Trägerschicht,
(b) gegebenenfalls Aufbringen einer oder mehrerer poröser Zwischenschichten auf der porösen Trägerschicht,
(c) Aufbringen von Verbindungen mit mindestens einer Polyhydroxyphenol-Gruppe auf der porösen keramischen Trägerschicht oder einer gegebenenfalls vorgesehenen porösen Zwischenschicht, entweder
   ∘ in Form einer wässrigen Lösung der Verbindungen mit mindestens einer Polyhydroxyphenol-Gruppe und anschließender Polymerisation bzw. Copolymerisierung in-situ, oder
   ∘ in Form einer wässrigen Dispersion oder Suspension von bereits polymerisierten bzw. copolymerisierten Partikeln der Verbindungen mit mindestens einer Polyhydroxyphenol-Gruppe,
   wobei eine Polymerisation von Katecholaminen ausgenommen ist,
(d) Thermische Behandlung bei 60 bis 450°C, bevorzugt 100 bis 400°C, bevorzugter 150 bis 250°C, in Luft,
(e) ggf. (bevorzugt) Karbonisierung der Polymere und/oder Copolymere der Verbindungen mit mindestens einer Polyhydroxyphenol-Gruppe bei einer Temperatur > 300 °C, bevorzugt zwischen 500 und 1000 °C unter Erhalt einer Schicht karbonisierter Polymere und/oder Copolymere von Verbindungen mit mindestens einer Polyhydroxyphenol-Gruppe.

Das erfindungsgemäße Verfahren kann außerdem einen Schritt des Aufbringens einer Schicht von Graphenoxid, teilweise reduziertem Graphenoxid oder Graphen umfassen.

Um erfindungsgemäße Membranen mit einer Deckschicht von Graphenoxid, teilweise reduziertem Graphenoxid oder Graphen herzustellen, wird in dem erfindungsgemäßen Verfahren wie hierin beschrieben nach dem oben beschriebenen Schritt (d) eine wässrige kolloidale Dispersion von Graphenoxid auf der Schicht der Polymere und/oder Copolymere von Verbindungen mit mindestens einer Polyhydroxyphenol-Gruppe aufgebracht unter Erhalt einer Membran mit einer Schicht polymerisierter bzw. copolymerisierter Verbindungen mit mindestens einer Polyhydroxyphenol-Gruppe in Form einer Klebeschicht und einer darüber angeordneten Deckschicht umfassend Graphenoxid, teilweise reduziertes Graphenoxid oder Graphen. Gegebenenfalls wird außerdem der Schritt (e) der Karbonisierung und/oder gegebenenfalls eine Reduktion der GO-Schicht durchgeführt.

Um erfindungsgemäße Membranen mit einer gemischten Deckschicht (Verbundschicht) von Graphenoxid, teilweise reduziertem Graphenoxid oder Graphen und polymerisierten bzw. copolymerisierten Verbindungen mit mindestens einer Polyhydroxyphenol-Gruppe herzustellen, werden in dem erfindungsgemäßen Verfahren wie hierin beschrieben im Schritt (c) in eine wässrige Lösung der Verbindungen mit mindestens einer Polyhydroxyphenol-Gruppe Graphen- und/oder Graphenoxidpartikel eingemischt und diese Mischung anschließend in-situ polymerisiert bzw. copolymerisiert, gefolgt von der thermischen Behandlung in Schritt (d) und ggf. (bevorzugt) gefolgt von der Karbonisierung in Schritt (e) unter Erhalt einer Membran mit einer Schicht thermisch stabilisierter (bevorzugt karbonisierter) Polymere bzw. Copolymere von Verbindungen mit mindestens einer Polyhydroxyphenol-Gruppe in Form einer gemischten Matrix mit Graphenoxid, teilweise reduziertem Graphenoxid oder Graphen.

Um erfindungsgemäße Membranen in einem industriell attraktiven Maßstab herzustellen, ist es bevorzugt Träger mit einer röhrenförmigen Geometrie zu verwenden. Im Labormaßstab können röhrenförmige Träger eine Länge von mindestens 10 cm bis 50 cm aufweisen. Kommerziell erhältliche röhrenförmige Trägermaterialien wie sie in den nachfolgend beschriebenen Beispielen eingesetzt werden können, haben beispielsweise eine Länge von mindestens 10 bis mindestens 25 cm. Die röhrenfärmigen Träger können aber durchaus auch noch größer sein, da das erfindungsgemäße Verfahren frei skalierbar ist. Für industrielle Membrananwendungen werden in der Regel deutlich größere Membrangehäuse eingesetzt, in denen beispielsweise röhrenförmige Membranen mit einer Länge von 100 bis 150 cm Platz finden. Durch die freie Skalierbarkeit des erfindungsgemäßen Verfahrens können die im Beispielteil beschriebenen Bedingungen problemlos auf solche großen Maßstäbe übertragen werden.

Trägermaterialien im Sinne der Erfindung können beispielsweise in einem geeigneten Becken mittels Tauchverfahren beschichtet werden. Wie im experimentellen Teil beschrieben können beispielsweise röhrenförmige Trägermaterialien in einem ausreichend großen Becken, enthaltend flüssige Lösungen oder Dispersionen der Beschichtungsmaterialien, platziert werden. Das Beckensystem wird beispielsweise mit einer dazu geeigneten Schüttelvorrichtung in Bewegung versetzt, so dass die Beschichtungslösungen um und durch die darin platzierten Trägermaterialien fließen und eine gleichmäßige Beschichtung bewirken.

In den Beschichtungsbecken können die darin platzierten Trägermaterialien durch geeignete Befestigungsvorrichtungen fixiert werden.

Es können auch klassische Tauchbeschichter eingesetzt werden. Eine gängige Variante der Tauchbeschichtung, die von einigen Membranherstellern verwendet wird, besteht darin, die Beschichtungsflüssigkeit in die zu beschichtenden röhrenförmigen Trägermaterialien hinein zu pumpen und die Rohre anschließend wieder zu evakuieren. Übliche Tauchverfahren sind ebenfalls geeignet.

Die Polymerisierung bzw. Copolymerisierung der Verbindungen mit mindestens einer Polyhydroxyphenol-Gruppe erfolgt in der Regel spontan, bevorzugt wird diese unter Sauerstoff / Luft und ggf. in Gegenwart eines Puffers erfolgen.

Es ist außerdem möglich, durch Zugabe eines Oxidationsmittels, insbesondere starker Oxidationsmittel, die Polymerisation bzw. Copolymerisierung der Polymere und/oder Copolymere von Verbindungen mit mindestens einer Polyhydroxyphenol-Gruppe zu triggern bzw. zu beschleunigen. Durch die Verwendung von Oxidationsmitteln ist es auch möglich, das Verfahren unter Ausschluss von Sauerstoff / Luft durchzuführen, beispielsweise in einem geschlossenen System. Dies ist insbesondere in der industriellen Herstellung interessant. Somit können, neben atmosphärischer Luft, als (alternative oder zusätzliche) Oxidationsmittel auch reiner Sauerstoff oder andere oxidierende Reagenzien wie Ammoniumpersulfat, Kaliumpersulfat, Natriumpersulfat, Natriumperiodat, Kaliumpermanganat, Wasserstoffperoxid, Cu²⁺-Salze (z.B. CuSO₄), Fe³⁺-Salze (z.B. FeCl₃) oder Mischungen davon eingesetzt werden. Bevorzugt werden Oxidationsmittel aus der Gruppe umfassend Ammoniumpersulfat, Wasserstoffperoxid und CuSO₄ ausgewählt, besonders bevorzugt ist Ammoniumpersulfat.

Das Verhältnis von Comonomeren der Verbindungen mit mindestens einer Polyhydroxyphenol-Gruppe in einer Lösung zueinander zur Herstellung von Copolymeren, z. B. das Verhältnis von Dopamin zu Tannin, kann variieren. Beispielsweise können diese in einem Massenverhältnis von 1 : 10 bis 10 : 1, bevorzugt in einem Massenverhältnis von 5 : 10 bis 10 : 5, noch bevorzugter in einem Massenverhältnis von 1 : 1 eingesetzt werden.

Die Menge des zu der Lösung der Verbindungen mit mindestens einer Polyhydroxyphenol-Gruppe, z.B. Dopamin und Tannin, zugesetzten Oxidationsmittels kann je nach Stärke variieren. Beispielsweise können diese in einem Molverhältnis von 1 : 10 bis 10 : 1 (Gesamtheit der Verbindungen mit mindestens einer Polyhydroxyphenol-Gruppe : Oxidationsmittel), bevorzugt in einem Molverhältnis von 5 : 10 bis 10: 2, noch bevorzugter in einem Molverhältnis von 10 : 10 (bzw. 1:1) zugesetzt werden.

Bevorzugt wird in dem erfindungsgemäßen Verfahren wie hierin beschrieben, Graphenoxid in Form einer wässrigen kolloidalen Dispersion von Graphenoxidpartikeln mit einer Partikelgröße zwischen 10 nm und 5 µm eingesetzt.

Bevorzugt wird in dem erfindungsgemäßen Verfahren wie hierin beschrieben, Graphenoxid in Form einer wässrigen kolloidalen Dispersion mit einem Feststoffgehalt von Graphenoxidpartikeln zwischen 20 mg und 2 g pro Liter kolloidale Dispersion eingesetzt.

Bevorzugt wird in dem erfindungsgemäßen Verfahren wie hierin beschrieben in Schritt (e) die Karbonisierung in reduzierender Atmosphäre unter Argon / 3% H₂ durchgeführt und im Fall des Vorliegens einer Schicht enthaltend Graphenoxid wird dieses zumindest teilweise zu Graphen reduziert.

In dem erfindungsgemäßen Verfahren wie hierin beschrieben erfolgt das Aufbringen der Schicht enthaltend die Verbindungen mit mindestens einer Polyhydroxyphenol-Gruppe, und/oder der Schicht enthaltend Graphenoxid, teilweise reduziertes Graphenoxid oder Graphen, unabhängig voneinander, jeweils mittels Tauchverfahren (z.B. durch Ein- oder Untertauchen), Dip-Coating, Spin-Coating, Sprühen, Roller-Coating, Tintenstrahldruck oder Vakuumfiltration und andere bekannte Beschichtungsverfahren. Im Prinzip können dabei die gleichen Vorrichtungen für Tauchverfahren eingesetzt werden, die vorstehend im Zusammenhang mit der Beschichtung mit der Zwischenschicht beschrieben wurden.

Wird ein Reduktionsschritt durchgeführt, kann die Auswahl, über welches Verfahren die Reduktion erzielt werden kann (chemisch oder thermisch) von der Materialwahl der eingesetzten Trägerschicht und den Zwischenschichten abhängig gemacht werden. Sofern die Membranstruktur den für die Reduktion notwendigen höheren Temperaturen standhält, wird vorzugsweise ein thermisches Verfahren verwendet, weil es einfacher ist. Dabei werden die sauerstoffhaltigen Gruppen der Deckschicht in Vakuum oder unter reduzierender Atmosphäre (z.B. Ar/H₂) eliminiert. Für eine vollständige Reduktion sind höhere Temperaturen > 300 °C, bevorzugt zwischen 500 °C und 1000 °C notwendig. Um dies zu ermöglichen, eignen sich besonders mehrschichtige Membranstrukturen, wie die in WO2016/177355 beschriebenen, die neben einem thermisch stabilen makroporösen Träger auch thermisch stabile mesoporöse Schichten enthalten. In bevorzugten Ausführungsformen bestehen diese aus Zirkoniumdioxid, insbesondere mit Yttrium stabilisiertem Zirkoniumdioxid (YSZ), und besonders vorteilhaft ist das so genannten 8YSZ, welches in besonderem Maße thermisch stabil ist.

In dem erfindungsgemäßen Verfahren wie hierin beschrieben erfolgt der Aufbau der Membran in Bezug auf die Träger- und/oder Zwischenschicht(en) sowie einer gegebenenfalls vorgesehenen Deckschicht von Graphenoxid, teilweise reduziertem Graphenoxid oder Graphen wie in WO2016/177355 beschrieben und diese Verfahrensschritte und Parameter werden hier vollumfänglich umfasst.

Die Erfindung betrifft außerdem die Verwendung von thermisch stabilisierten (bevorzugt karbonisierten) Polymeren und/oder Copolymeren von Verbindungen mit mindestens einer Polyhydroxyphenol-Gruppe als Molekularsiebmembran zur Abtrennung von He und H₂ oder H₂O.

Außerdem betrifft die Erfindung die Verwendung der hierin beschriebenen mehrschichtigen Membranen als Molekularsiebmembran zur Abtrennung von He, H₂ und/oder CO₂ oder von H₂O.

Ein besonderer Aspekt der Erfindung betrifft die Verwendung der hierin beschriebenen Membranen, welche eine Schicht karbonisierter Polymere und/oder Copolymere von Verbindungen mit mindestens einer Polyhydroxyphenol-Gruppe aufweisen, als Molekularsiebmembran zur Abtrennung von He, H₂ und/oder CO₂ oder von H₂O.

Dabei sind erfindungsgemäße Membranen, worin die Schicht polymerisierter bzw. copolymerisierter Verbindungen mit mindestens einer Polyhydroxyphenol-Gruppe lediglich der thermischen Behandlung gemäß dem hierin beschriebenen Verfahrensschritt (d) unterworfen werden, aber nicht der Karbonisierung gemäß Schritt (e), diese also nicht in Form karbonisierter Polymere und/oder Copolymere von Verbindungen mit mindestens einer Polyhydroxyphenol-Gruppe vorliegen, besonders für die Verwendung als Membran zur Abtrennung von H₂O aus Lösungsmittelgemischen vorgesehen.

Im Sinne der Erfindung umfasst die Trennung von Gas-, Dampf- und Flüssigkeitsgemischen insbesondere die Trennung von kleinsten Molekülen/Atomen aus Gas- und Dampfgemischen und/oder die Abtrennung von Wasser, insbesondere in Form von Wasserdampf, aus Flüssigkeitsgemischen, wie z.B. aus Lösungsmittelgemischen, in flüssiger oder in Dampfform.

Zur weiteren Verdeutlichung der Erfindung wird diese anhand von einigen Figuren, Diagrammen und Ausführungsbeispielen näher erläutert, ohne dass dies zu einer Einschränkung der Erfindung führen soll.

### BESCHREIBUNG DER FIGUREN

- Fig. 1: schematische Darstellung der Membrantrennung [Scholes, C. A. et al., Recent Patents on Chemical Engineering 2008, 52-66, S. 53].
- Fig. 2: schematische Darstellung der drei grundlegenden Trennmechanismen an Membranen [Scholes, C. A. et al., Recent Patents on Chemical Engineering 2008, 52-66, S. 53].
- Fig. 3: schematische Darstellung der Molekularsieb-Funktion von Graphen/GO-Trennmembranen
- Fig. 4: schematische Darstellung der Schichten einer erfindungsgemäßen Membran, worin die Schicht thermisch stabilisierter bzw. karbonisierter Polymere und/oder Copolymere von Verbindungen mit mindestens einer Polyhydroxyphenol-Gruppe die Deckschicht bildet.
- Fig. 5: schematische Darstellung der Schichten einer erfindungsgemäßen Membran, worin die Schicht thermisch stabilisierter bzw. karbonisierter Polymere und/oder Copolymere von Verbindungen mit mindestens einer Polyhydroxyphenol-Gruppe eine Klebeschicht bildet, die eine poröse Zwischenschicht mit einer Deckschicht von Graphenoxid, teilweise reduziertem Graphenoxid oder Graphen verbindet.
- Fig. 6: schematische Darstellung der Schichten einer erfindungsgemäßen Membran, worin die Schicht thermisch stabilisierter bzw. karbonisierter Polymere und/oder Copolymere von Verbindungen mit mindestens einer Polyhydroxyphenol-Gruppe mit Graphenoxid, teilweise reduziertem Graphenoxid oder Graphen in Form einer gemischten Matrix-/Verbundschicht die auf einer porösen Zwischenschicht aufgebrachte Deckschicht bildet.
- Fig. 7: schematische Darstellung der Schichten einer erfindungsgemäßen Membran mit einer als Deckschicht ausgebildeten karbonisierten Co-PDA-PTA-Polymerschicht (3), zwei mesoporösen keramischen Zwischenschichten (4) und einer makroporösen keramischen Trägerschicht (2).
- Fig. 8: REM-Querschnittsbild einer erfindungsgemäßen Membran gemäß Beispiel 1
- Fig. 9: Gaspermeation von H₂, CO₂, N₂ und CH₄ einer erfindungsgemäßen Membran (Zweifachmessung) gemäß Beispiel 1 gemessen bei 200°C und 1 bar.
- Fig. 10: Temperaturabhängigkeit der Gaspermeation von H₂, CO₂, N₂ und CH₄ einer erfindungsgemäßen Membran (Zweifachmessung) gemäß Beispiel 1 gemessen bei 1 bar und bei 22°C, 50°C, 100°C, 150°C und 200°C.

### BEZUGSZEICHEN

- (1): Membran für die Trennung von Gas-, Dampf- und Flüssigkeitsgemischen
- (2): poröse keramische Trägerschicht
- (3): Schicht thermisch stabilisierter (bevorzugt karbonisierter) polymerisierter bzw. copolymerisierter Verbindungen mit mindestens einer Polyhydroxyphenol-Gruppe
- (3a): Schicht thermisch stabilisierter (bevorzugt karbonisierter) polymerisierter bzw. copolymerisierter Verbindungen mit mindestens einer Polyhydroxyphenol-Gruppe in Form einer Deckschicht
- (3b): Schicht thermisch stabilisierter (bevorzugt karbonisierter) polymerisierter bzw. copolymerisierter Verbindungen mit mindestens einer Polyhydroxyphenol-Gruppe in Form einer Klebeschicht
- (3c): Schicht thermisch stabilisierter (bevorzugt karbonisierter) polymerisierter bzw. copolymerisierter Verbindungen mit mindestens einer Polyhydroxyphenol-Gruppe in Form einer gemischten Matrix / Verbundschicht mit Graphenoxid, teilweise reduziertem Graphenoxid oder Graphen
- (4): poröse Zwischenschicht(en)
- (5): Schicht von Graphenoxid, teilweise reduziertem Graphenoxid oder Graphen

### BEISPIELE

### Beispiel 1 - Herstellung einer Membran mit karbonisierter Co-PDA-PTA-Polymer Trennschicht

Zur Herstellung einer erfindungsgemäßen Membran wurde zunächst eine mehrschichtige Anordnung poröser Träger- und Zwischenschichten bereitgestellt, worin auf einer makroporösen α-Al₂O₃-Trägerscheibe oder einem α-Al₂O₃-Rohr als makroporöse Trägerschicht zwei mesoporöse Trägerschichten von Yttrium stabilisiertem Zirkoniumdioxid (8YSZ) mit einer Porengröße von 5 nm bzw. 3 nm aufgebracht sind.

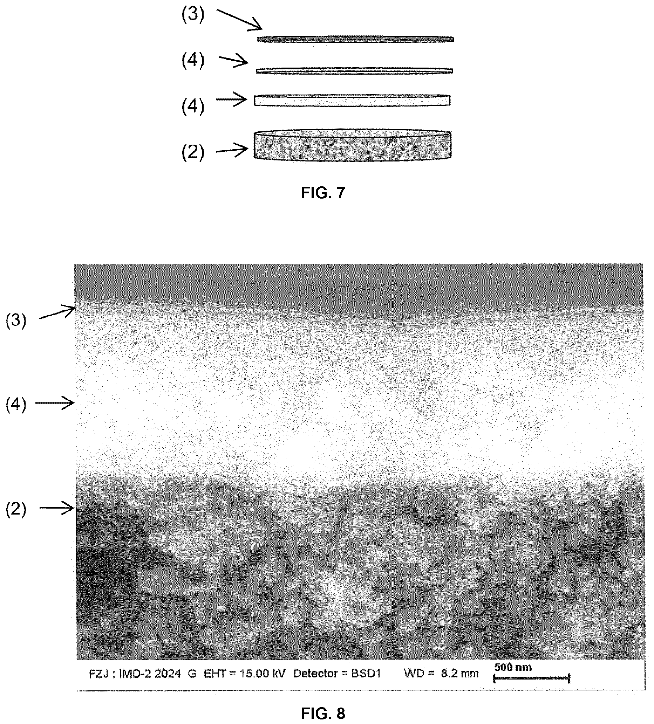

Diese schichtförmige Anordnung wurde durch Aufbringen einer verdünnten wässrigen Lösung von Dopamin und Tannin mit einer erfindungsgemäßen Schicht von Verbindungen mit mindestens einer Polyhydroxyphenol-Gruppe beschichtet, so dass die mesoporösen Trägerschichten von Yttrium stabilisiertem Zirkoniumdioxid (8YSZ) Zwischenschicht zwischen der Dopamin-Tannin-Schicht und der makroporösen Trägerschicht bilden, wie in Figur 7 dargestellt.

Die verdünnte wässrige Lösung von Dopamin und Tannin kann einen Feststoffanteil zwischen 0,3 und 10 mg/ml, vorzugsweise zwischen 2 und 6 mg/ml aufweisen.

Im vorliegenden Beispiel wurde ein röhrenförmiger Träger (25 cm Länge) für 24 Stunden in einer mildalkalischen (pH 8.5; Tris-Buffer) wässrigen Dopamin-Tannin-Lösung (50:50%; Konzentration 4 mg/ml) durch Tauchbehandlung unter ständigem Rühren oder Schütteln der Lösung beschichtet. Wie bei porösen Keramikmembranen üblich, wurden die Funktionsschichten auf der Innenseite des Trägerrohrs aufgebracht. Dafür können Trägerrohre in die Beschichtungslösung eingetaucht und alle 15 Minuten für eine Minute aus der Lösung automatisch herausgehoben werden, um die Schicht mit ausreichend Sauerstoff für die Copolymerisierung zu versorgen, um sie danach erneut einzutauchen.

In einer alternativen Beschichtungsmethode können die Trägerrohre in ein offenes Wellenbad gebracht werden, das für starke dynamische Bedingungen sorgt, so dass ausreichend Sauerstoff in die Lösung gelangt und ständig frische Lösung in das innere der Trägerrohre gelangt.

Nach der Beschichtung werden die beschichteten Trägerrohre aus der Lösung herausgenommen, reichlich mit Wasser gewaschen, und eine Stunde lang bei Raumtemperatur getrocknet. Weitere mögliche alternative Beschichtungsmethoden umfassen bekannte Beschichtungsverfahren wie Spin-Coating, Sprühen oder auch (Vakuum)filtration.

Im Anschluß an die Beschichtung und in-situ Copolymerisierung folgt eine thermische Behandlung bei 200°C in Luft und anschließend in reduzierender Atmosphäre (500°C, Ar/H₂ (3%)), wobei eine dünne karbonisierte Membranschicht gebildet wird. Figur 8 zeigt eine REM-Aufnahme einer so erhältlichen Membran. Daraus ist erkennbar, dass erfindungsgemäße Trennschicht des karbonisierten Co-PDA-PTA-Polymers gut mit der darunter liegenden 8YSZ-Zwischenschicht verbunden ist. Hochauflösende Bilder zeigen, dass die erfindungsgemäße Schicht des karbonisierten Co-PDA-PTA-Polymers zwischen 25 und 50 nm dick ist. Aus weiteren REM-Oberflächenaufnahmen ist außerdem ersichtlich, dass die 8YSZ-Zwischenschicht homogen mit der karbonisierten Co-PDA-PTA-Polymerschicht bedeckt ist und keine erkennbaren Risse oder Defekte aufweist.

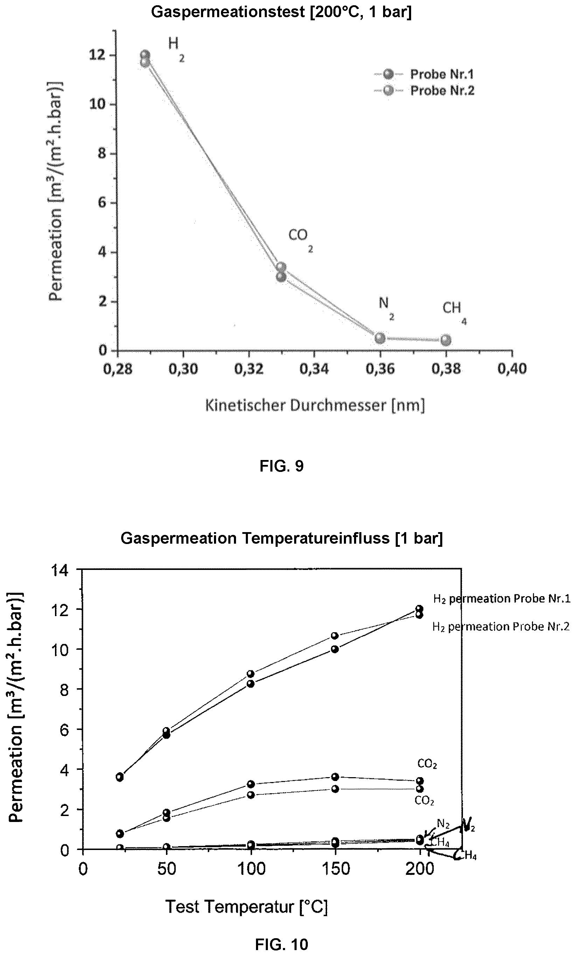

Die (Einzel)Gaspermeanzen von zwei Membran-Prototypen (getauchte Proben) wurden im Dead-End-Modus gemessen. Dabei wurden H₂ (kinetischer Durchmesser 0,289 nm), CO₂ (0,33 nm), N₂ (0,364 nm) und CH₄ (0,38 nm) als Testgase verwendet. Die Gaspermeation wurde für Temperaturen zwischen 200 °C und 22 °C und einem Feeddruck von 1 bar bestimmt. Die durchschnittlichen Permeanzen bei 200 °C und 1 bar zeigt die Figur 9.

Es ist deutlich zu erkennen, dass die Membran molekulares Siebverhalten zeigt mit H₂ als permeierendes Gas, während N₂ und CH₄ viel langsamer durch die Membran permeieren. Die resultierende H₂-Permeanz ist auch extrem hoch [> 10 m³/(m²·h·bar)], was die höchste bisher beschriebene Permeanz für H₂-Trennmembranen mit einer solchen Selektivität darstellt. Die resultierende Selektivität für H₂ gegenüber N₂ und CH₄ liegt hier für beide getesteten Proben bei 25 bis 30.

Auch die CO₂-Permeation ist überraschend hoch bei 200°C [~ 3 m³/(m²·h·bar)], was für eine Membran mit Molekularsiebverhalten, die H₂ trennen kann, bemerkenswert ist. Völlig unerwartet konnte gezeigt werden, dass die getesteten Membranen auch bei erhöhten Temperaturen zwischen CO₂ und z.B. N₂ oder CH₄ selektiv trennten. Üblicherweise basiert die Trennung von CO₂ von größeren Gasen bei Verwendung von porösen Keramikmembranen auf einem Adsorptionsmechanismus, und da die CO₂-Adsorption mit steigender Temperatur stark abnimmt, ist die CO₂-Trennung daher mit derartigen bekannten Membranen nur bei Raumtemperatur möglich.

Die neue Membran zeigt also ein deutliches Molekularsiebverhalten, und der starke Abfall der Permeanz zwischen einerseits H₂ und N₂ oder CH₄, aber andererseits auch zwischen CO₂ und N₂ oder CH₄, zeigt, dass die effektiven Transportkanäle in der Membran im Bereich von 0,3 bis 0,4 nm liegen.

Der Temperatureinfluss auf den Gastransport wurde durch Messung der Gas-Durchlässigkeit bei verschiedenen Temperaturen (22°C bis 200°C) untersucht (siehe Figur 10). Die Messung zeigt einen Anstieg der Permeanz aller untersuchten Gase mit der Temperatur, wobei die Ergebnisse für beide getesteten Proben mit nur geringen Abweichungen vergleichbar sind. Diese Temperaturabhängigkeit bestätigt, dass der Gastransport durch die Membran von Mikroporen-Diffusion dominiert wird. Die Gasselektivität war außerdem bei niedrigeren Temperaturen ebenso gut, was bedeutet, dass die Membran auch für den Niedertemperaturbereich geeignet ist. Die H₂-Permeanz war hier zwar geringer als bei 200 °C, aber immer noch höher als bei herkömmlichen H₂-Permeationsmembranen aus dem Stand der Technik.

### Definitionen / Charakterisierungsmethoden:

Die Porengröße der hierin beschriebenen Membranschichten kann durch Permporosimetrie nach herkömmlichen Verfahren bestimmt werden.

Die Partikelgrößen der hierin beschriebenen Graphen- und Graphenoxidpartikel zur Herstellung der optionalen Grahphen- oder Graphenoxidschichten kann mittels DLS (Dynamische Lichtstreuung) nach herkömmlichen Verfahren bestimmt werden. Die Partikelgrößenverteilungen der Beschichtungslösungen wurden mit einem Horriba LB-550 Partikelanalysator für dynamische Lichtstreuung erfasst.

Die Schichtdicken der hierin beschriebenen Membranschichten können mittels TEM und REM nach herkömmlichen Verfahren bestimmt werden. Die morphologische Charakterisierung der Trägerschichten und der Membran-Deckschicht erfolgte durch Übergangselektronenmikroskopie (transition electron microscopy; TEM), Elektronenbeugung (selected area electron diffraction; SAED) und Feldemissions-Rasterelektronenmikroskopie (field emission scanning electron microscopy; FESEM). Um die geschichtete Struktur des Verbundträgermaterials abzubilden, wurden niedrig aufgelöste TEM-Bilder einer dünnen Querschnittslamelle mit einem FEI Tecnai G2 F20 Mikroskop bei 200 kV Beschleunigungsspannung aufgenommen. Die Lamelle (Dicke ca. 100 nm) wurde mit einem FEI Helios Nanolab 400S durch fokussiertes lonenstrahlfräsen (FIB) aus der Membranprobe entnommen. Anschließend wurden die Dicke und die Schichtstruktur der Membran-Deckschicht mit einem hochauflösenden TEM bestimmt. Zusätzlich wurden FE-SEM-Bilder mit einem Zeiss Ultra 50 Mikroskop aufgenommen, um die Oberfläche und den Querschnitt der Deckschicht weiter zu charakterisieren. Für das REM wurde die Membran gebrochen und ein ca. 10 mm langes Stück in einem Halter eingespannt und mit einem Klebeband kontaktiert.

Für die Untersuchung der Gasdurchlässigkeit (Permeation) wurden die untersuchten Testmembranen vor der Messung mit O-Ringen, die bis zu 250°C thermisch stabil sind, versiegelt. Der Gasfluss auf der Zufuhrseite der Membran wurde mit einem Brooks 5866 Druckregler auf 5 bar (bei Proben in Form von Scheiben) bzw. 1 bar (bei rohrförmigen Proben) geregelt. Zur Bestimmung der Gaspermeanz auf der Permeatseite intelligente Massenflussmesser von Brooks verwendet. Als Prüfgase wurden He (kinetischer Durchmesser 0,26 nm), H₂ (0,289 nm), CO₂ (0,33 nm), N₂ (0,364 nm) und CH₄ (0,38 nm) verwendet. Die Gasdurchlässigkeit wurde bei Temperaturen zwischen 200°C und 22°C bestimmt, höhere Temperaturen waren mit diesem experimentellen Aufbau aufgrund der begrenzten Temperaturfähigkeit der verwendeten O-Ringe nicht möglich.

## Patentansprüche

1. Verfahren zur Herstellung von Membranen (1) für die Trennung von Gas-, Dampf- und Flüssigkeitsgemischen, umfassend die Schritte
(a) Bereitstellung oder Herstellung einer porösen keramischen Trägerschicht (2),
(b) gegebenenfalls Aufbringen einer oder mehrerer poröser Zwischenschichten (4) auf der porösen keramischen Trägerschicht (2),
(c) Aufbringen von Verbindungen mit mindestens einer Polyhydroxyphenol-Gruppe auf der porösen keramischen Trägerschicht (2) oder einer gegebenenfalls vorgesehenen porösen Zwischenschicht (4), entweder
∘ in Form einer wässrigen Lösung der Verbindungen mit mindestens einer Polyhydroxyphenol-Gruppe und anschließender Polymerisation oder Copolymerisierung in-situ, oder
∘ in Form einer wässrigen Dispersion oder Suspension von bereits polymerisierten oder copolymerisierten Partikeln der Verbindungen mit mindestens einer Polyhydroxyphenol-Gruppe,
wobei eine Polymerisation von Katecholaminen ausgenommen ist,
(d) Thermische Behandlung bei 60 bis 450°C, bevorzugt 100 bis 400°C, bevorzugter 150 bis 250°C, in Luft,
(e) Karbonisierung der polymerisierten oder copolymerisierten Verbindungen mit mindestens einer Polyhydroxyphenol-Gruppe bei einer Temperatur > 300 °C, bevorzugt zwischen 500 und 1000 °C unter Erhalt einer Schicht karbonisierter Polymere und/oder Copolymere von Verbindungen mit mindestens einer Polyhydroxyphenol-Gruppe (3).

2. Verfahren gemäß Anspruch [1], worin in Schritt (c) die Verbindungen mit mindestens einer Polyhydroxyphenol-Gruppe Verbindungen sind, welche mindestens eine di- oder tri-Hydroxyphenolgruppe oder Kombinationen davon aufweisen, bevorzugt solche welche mindestens eine Polyhydroxyphenolgruppe mit zwei Hydroxygruppen in ortho-Position aufweisen.

3. Verfahren gemäß Anspruch [1] oder [2], worin in Schritt (c) zwei unterschiedliche Verbindungen mit mindestens einer Polyhydroxyphenol-Gruppe zur Bildung einer Schicht eines karbonisierten Copolymers eingesetzt werden.

4. Verfahren gemäß einem der Ansprüche [1] bis [3], worin in Schritt (c) die Verbindungen mit mindestens einer Polyhydroxyphenol-Gruppe Verbindungen sind, welche mindestens eine Katechol-Gruppe 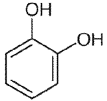 aufweisen.

5. Verfahren gemäß einem der Ansprüche [1] bis [3], worin in Schritt (c) die Verbindungen mit mindestens einer Polyhydroxyphenol-Gruppe ausgewählt werden aus der Gruppe umfassend Dopamin, Noradrenalin, Adrenalin, Tannine, Catechine, Kaffeesäure und Chlorogensäure.

6. Verfahren gemäß einem der Ansprüche [1] bis [5], worin in Schritt (c) Dopamin und Tannin zur Herstellung eines Copolymers (Co-PDA-PTA-Polymer) eingesetzt werden.

7. Verfahren gemäß einem der Ansprüche [1] bis [6], umfassend außerdem einen Schritt des Aufbringens einer Schicht (5) umfassend Graphenoxid, teilweise reduziertes Graphenoxid oder Graphen indem
• nach Schritt (d) eine wässrige kolloidale Dispersion von Graphenoxid auf der Schicht der polymerisierten oder copolymerisierten Verbindungen mit mindestens einer Polyhydroxyphenol-Gruppe aufgebracht wird und anschließend der Schritt (e) der Karbonisierung durchgeführt wird unter Erhalt einer Membran mit einer Schicht karbonisierter Polymere und/oder Copolymere von Verbindungen mit mindestens einer Polyhydroxyphenol-Gruppe in Form einer Klebeschicht (3b) und einer darüber angeordneten Deckschicht (5) umfassend Graphenoxid, teilweise reduziertes Graphenoxid oder Graphen; oder
• im Schritt (c) in eine wässrige Lösung der Verbindungen mit mindestens einer Polyhydroxyphenol-Gruppe Graphenoxidpartikel eingemischt werden und diese Mischung anschließend in-situ polymerisiert oder copolymerisiert wird, gefolgt von der thermischen Behandlung in Schritt (d) und der Karbonisierung in Schritt (e) unter Erhalt einer Membran mit einer Schicht karbonisierter Polymere und/oder Copolymere von Verbindungen mit mindestens einer Polyhydroxyphenol-Gruppe in Form einer gemischten Matrix mit Graphenoxid, teilweise reduziertem Graphenoxid oder Graphen (3c).

8. Membran für die Trennung von Gas-, Dampf- und Flüssigkeitsgemischen (1), erhältlich nach dem Verfahren nach einem der Ansprüche [1] bis [7].

9. Membran für die Trennung von Gas-, Dampf- und Flüssigkeitsgemischen (1), umfassend
- eine oder mehrere poröse keramische Trägerschichten (2) und
- mindestens eine Schicht (3) enthaltend karbonisierte Polymere und/oder Copolymere von Verbindungen mit mindestens einer Polyhydroxyphenol-Gruppe,
- und optional außerdem eine oder mehrere poröse Zwischenschichten (4) welche zwischen einer porösen keramischen Trägerschicht (2) und der die karbonisierten Polymere und/oder Copolymere von Verbindungen mit mindestens einer Polyhydroxyphenol-Gruppe enthaltenden Schicht (3) angeordnet sind.

10. Membran für die Trennung von Gas-, Dampf- und Flüssigkeitsgemischen gemäß Anspruch [9], worin die die karbonisierten Polymere und/oder Copolymere von Verbindungen mit mindestens einer Polyhydroxyphenol-Gruppe enthaltende Schicht eine äußere Deckschicht (3a) bildet.

11. Membran für die Trennung von Gas-, Dampf- und Flüssigkeitsgemischen gemäß Anspruch [9] oder [10], umfassend außerdem eine oder mehrere Schichten (5) welche Graphenoxid, teilweise reduziertes Graphenoxid oder Graphen aufweisen.

12. Membran für die Trennung von Gas-, Dampf- und Flüssigkeitsgemischen gemäß einem der Ansprüche [9] bis [11], worin die Verbindungen mit mindestens einer Polyhydroxyphenol-Gruppe für die Schicht der karbonisierten Polymere und/oder Copolymere von Verbindungen mit mindestens einer Polyhydroxyphenol-Gruppe ausgewählt werden aus solchen welche mindestens eine di- oder tri-Hydroxyphenolgruppe oder Kombinationen davon aufweisen, bevorzugt aus solchen welche mindestens eine Polyhydroxyphenolgruppe mit zwei Hydroxygruppen in ortho-Position aufweisen, bevorzugter aus solchen welche mindestens eine Katechol-Gruppe aufweisen, besonders bevorzugt solche ausgewählt aus der Gruppe umfassend Dopamin, Noradrenalin, Adrenalin, Tannine, Catechine, Kaffeesäure und Chlorogensäure, wobei Polymere von Dopamin, Noradrenalin und Adrenalin ausgenommen sind.

13. Membran für die Trennung von Gas-, Dampf- und Flüssigkeitsgemischen gemäß einem der Ansprüche [9] bis [12], worin die Schicht der karbonisierten Polymere und/oder Copolymere von Verbindungen mit mindestens einer Polyhydroxyphenol-Gruppe eine Schicht eines karbonisierten Copolymers von Dopamin und Tannin (Co-PDA-PTA-Polymer) ist.

14. Verfahren zur Abtrennung von He, H₂ und/oder CO₂ oder von H₂O aus Gas-, Dampf- und Flüssigkeitsgemischen mittels einer Molekularsiebmembran gemäß einem der Ansprüche [8] bis [13]

15. Verfahren zur Abtrennung von CO₂ aus Gas-, Dampf- und Flüssigkeitsgemischen bei Temperaturen oberhalb von Raumtemperatur mittels einer Molekularsiebmembran gemäß einem der Ansprüche [8] bis [13].
